# EUROPEAN PATENT APPLICATION

(11) **EP 1 596 327 A2**
(43) Date of publication of application: **16.11.2005**
(21) Application number: 05102957.7
(22) Date of filing: 14.04.2005
(51) Int. Cl.: G06N 5/00, G06F 17/30

(54) **Mining service requests for product support**

(30) Priority: 15.04.2004 US 826160
(71) Applicant: MICROSOFT CORPORATION, Redmond, Washington 98052-6399 (US)
(72) Inventor: Zhang, Benyu, Redmond, WA 98052 (US); Hirschler, Gabor R., Redmond, WA 98052 (US); Li, Hang, Redmond, WA 98052 (US); Zeng, Hua-Jun, Redmond, WA 98052 (US); Wen, Ji-Rong, Redmond, WA 98052 (US); Samuelson, Kurt A., Redmond, WA 98052 (US); Ma, Wei-Ying, Redmond, WA 98052 (US); Chen, Zheng, Redmond, WA 98052 (US)
(74) Representative: Zimmer, Franz-Josef

(57) **Abstract**

Systems and methods for mining service requests for product support are described. In one aspect, unstructured service requests are converted to one or more structured answer objects. Each structured answer object includes hierarchically structured historic problem diagnosis data. In view of a product problem description, a set of the one or more structured answer data objects is identified. Each structured solution data object in the set includes term(s) and/or phrase(s) related to the product problem description. Historic and hierarchically structured problem diagnosis data from the set is provided to an end-user for product problem diagnosis.

## Description

### RELATED APPLICATIONS

This patent application is related to the following patent applications, each of which are commonly assigned to assignee of this application, and hereby incorporated by reference:
- U.S. Patent Application no. 10/427,548, titled "Object Clustering Using InterLayer Links", filed on 05/01/2003; and
- U.S. Patent Application no. 10/826,159, titled "Reinforced Clustering of Multi-Type Data Objects for Search Term Suggestion", filed on 04/15/04.

### TECHNICAL FIELD

Systems and methods of the invention pertain to data mining.

### BACKGROUND

Today's high technology corporations typically provide some aspect of product support to ensure that consumers and partners receive the maximum value on technology investments. For instance, a variety of consumer and business support offerings and strategic IT consulting services may be provided to help meet various needs of customers and partners. Support offerings may include phone, on-site, Web-based support, and so on. Unfortunately, such product support services can become prohibitively expensive, not only in terms of financial costs, but also the amount of time required to find a solution to a problem experienced by an end-user. For instance, onsite support offering are typically expensive to the extent that non-corporate consumers may not be able to afford to hire an individual product consultant or troubleshooter.

Additionally, when services are automated (for instance, via online searches of a knowledge base comprising product help (how to) and/or troubleshooting articles) the amount of time that it may take the consumer to identify an on-point set of articles may become prohibitive. One reason for this is because knowledge base articles are typically generated by professional writers, vendors, and/or the like, and not the everyday users of the products for which support is sought. In such a scenario, if a user does not form a search query using the exact terminology adopted by the author of an on-point KB article, the user may find it very difficult and time consuming to locate any on-point knowledge base troubleshooting information. To make matters worse, KB articles are in general specific to one particular problem with one specific cause, that is, there is a lack of comprehensive documentation for multiple problem probing and diagnosis. Thus, the user may be required to locate and review many KB articles to come to a solution for a problem that has many potential causes.

### SUMMARY

Systems and methods for mining service requests for product support are described. In one aspect, unstructured service requests are converted to one or more structured answer objects. Each structured answer object includes hierarchically structured historic problem diagnosis data. In view of a product problem description, a set of the one or more structured answer data objects is identified. Each structured solution data object in the set includes keyword(s) and/or keyphrase(s) related to the product problem description. Historic and hierarchically structured problem diagnosis data from the set is provided to an end-user for product problem diagnosis.

### BRIEF DESCRIPTION OF THE DRAWINGS

In the figures, the left-most digit of a component reference number identifies the particular figure in which the component first appears.

Fig. 1 illustrates an exemplary system for mining service requests for product support.

Fig. 2 shows an exemplary troubleshooting wizard user interface to present hierarchically structured historical problem diagnosis data from structured answer object(s) to a user for selective product problem diagnoses interaction.

Fig. 3 illustrates an exemplary procedure 300 for a product support service server to mine service requests for product support.

Fig. 4 illustrates an exemplary procedure for a client computing device to present structured answer objects in a troubleshooting wizard to provide an end-user with product problem support.

Fig. 5 shows an exemplary suitable computing environment on which the subsequently described systems, apparatuses and methods for mining service requests for product support may be fully or partially implemented.

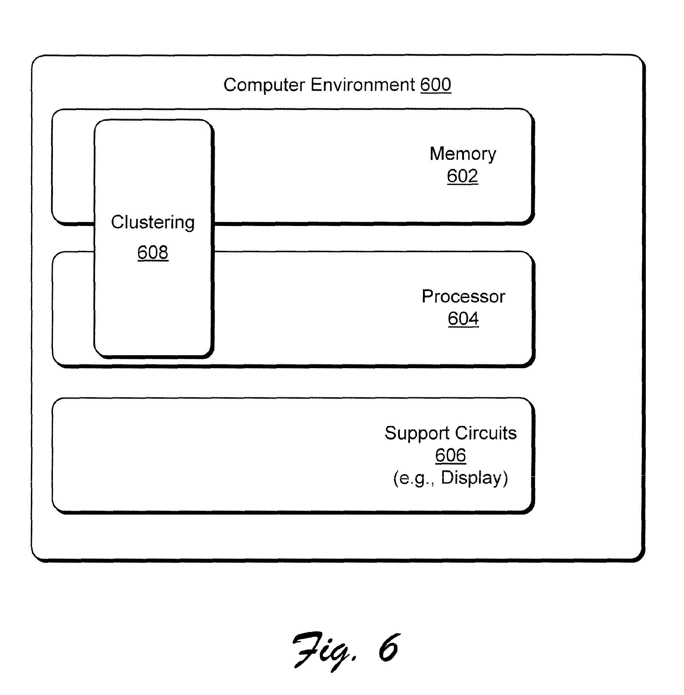

Fig. 6 is a block diagram of one embodiment of computer environment that can be used for clustering.

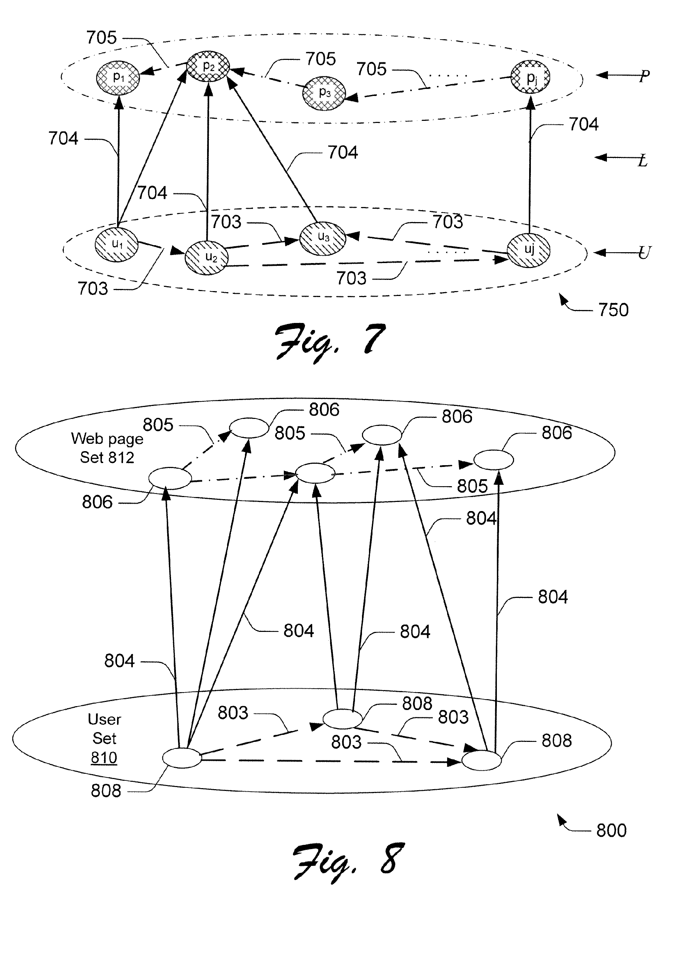

Fig. 7 is a block diagram of one embodiment of a framework for clustering heterogeneous objects.

Fig. 8 is a block diagram of one embodiment of hybrid net model.

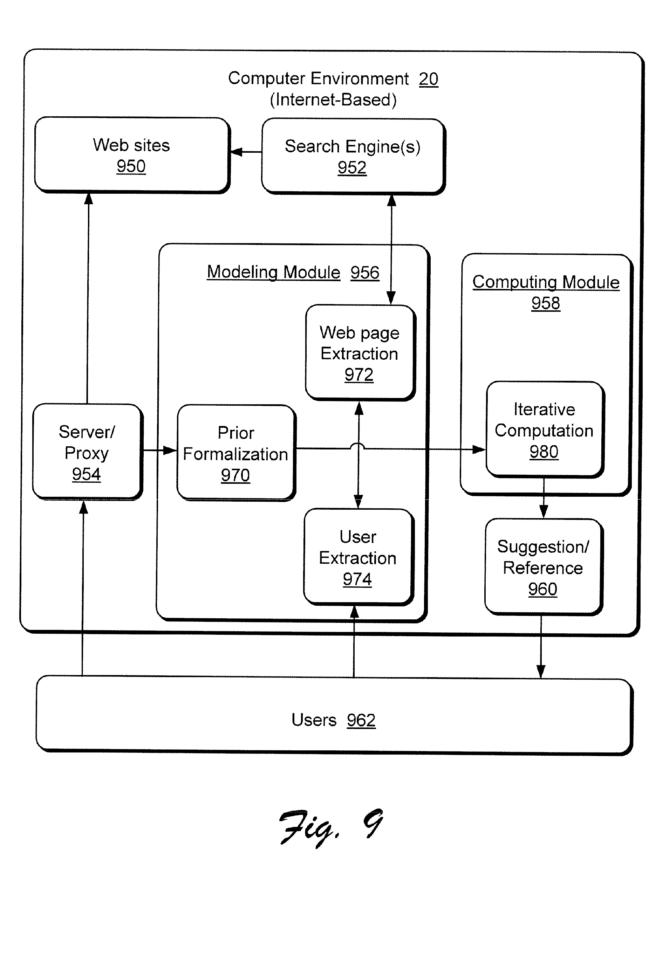

Fig. 9 is a block diagram of another embodiment of computer environment that is directed to the Internet.

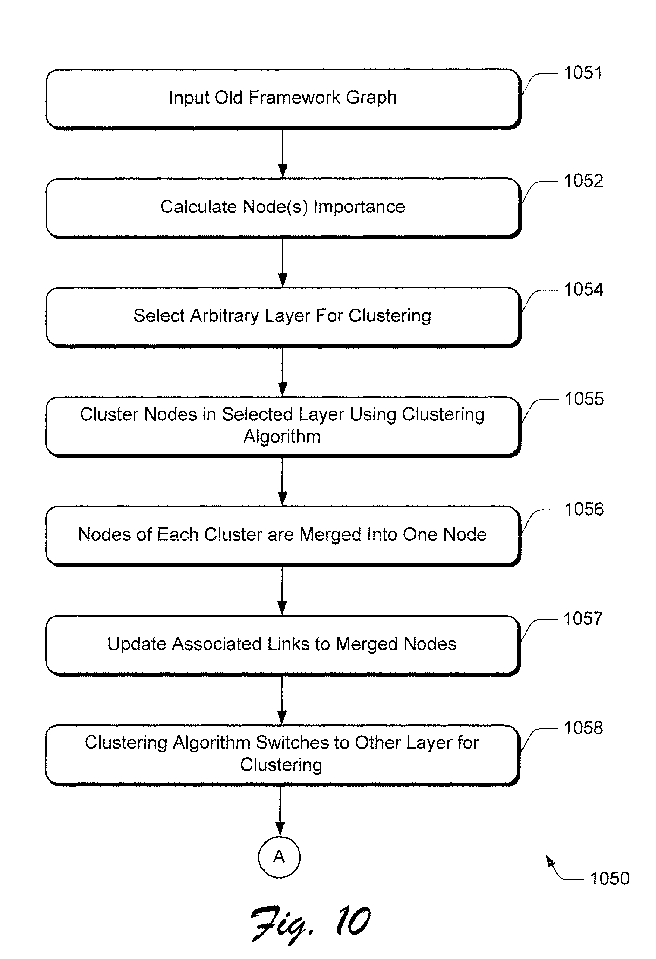

Fig. 10 is a flow chart of one embodiment of clustering algorithm

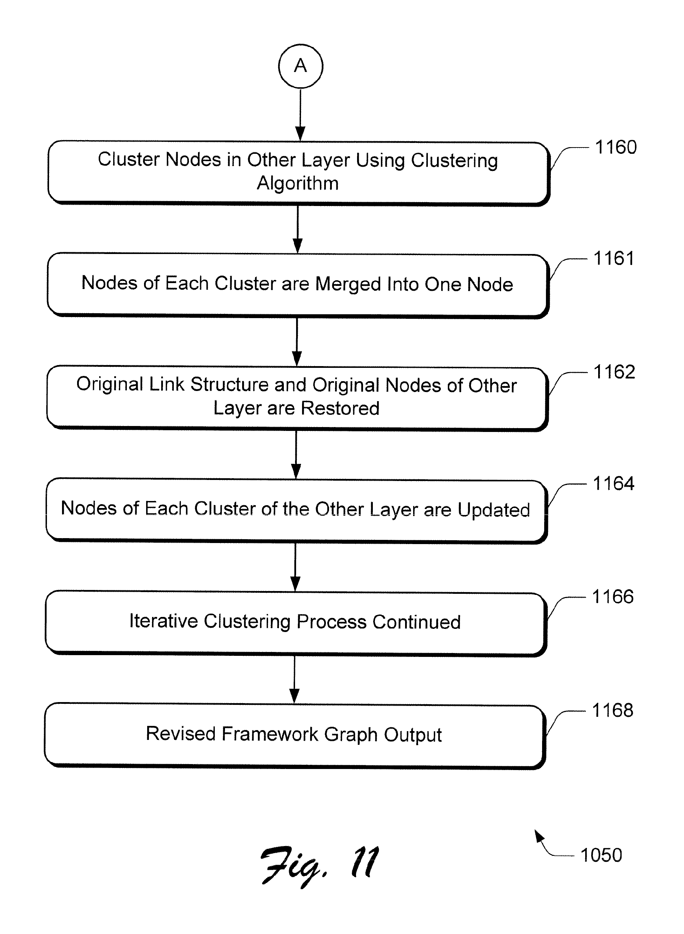

Fig. 11 is a flow chart of one embodiment of clustering algorithm

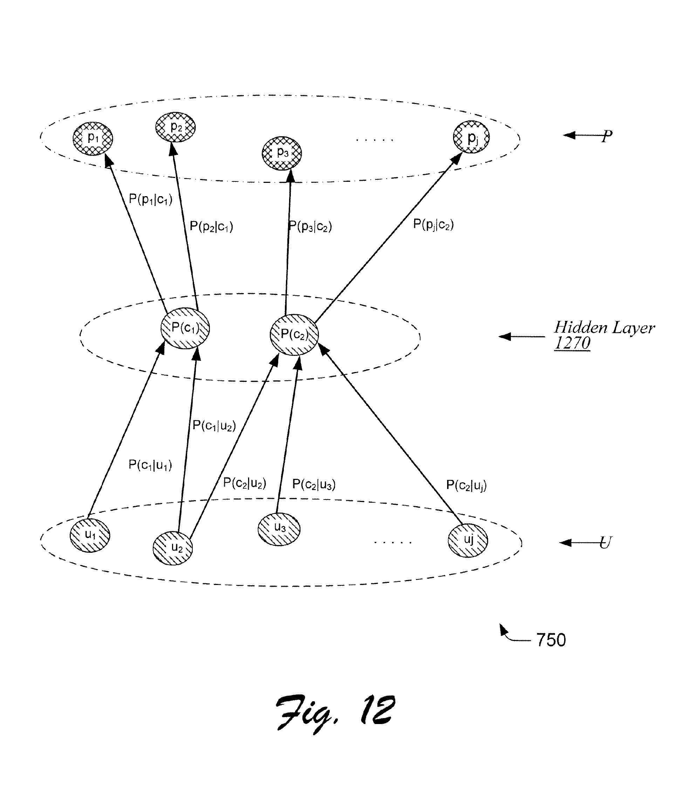

Fig. 12 is a block diagram of another embodiment of a framework for clustering heterogeneous objects that includes a hidden layer.

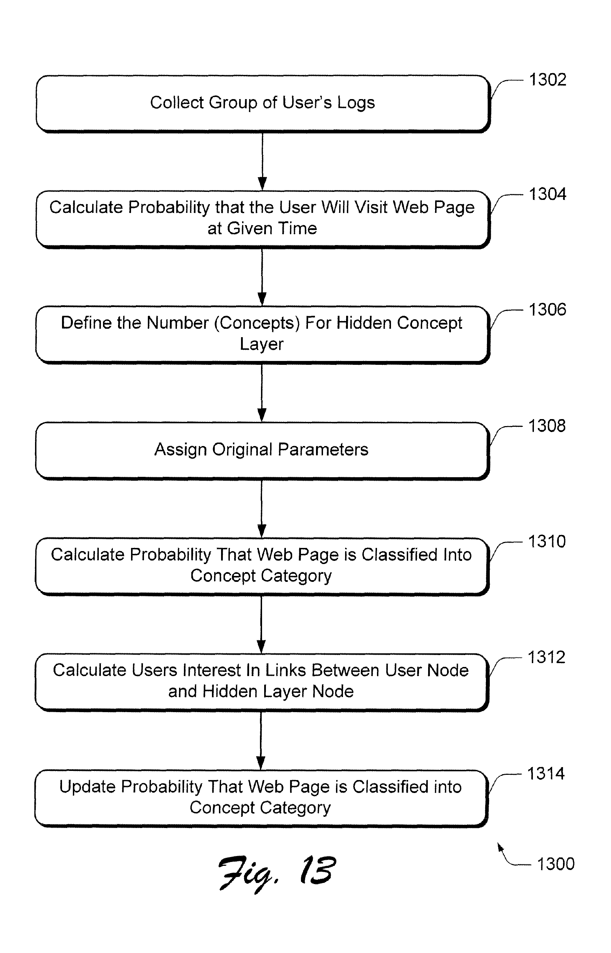

Fig. 13 is a flow chart of another embodiment of clustering algorithm

### DETAILED DESCRIPTION

### Overview

Knowledge Base (KB) and help ("how-to") articles are created to assist customers in locating a solution to solve / troubleshoot a product problem. Studies have shown that the easier it is for an end-user to search for and obtain an on-point KB article (i.e., one that directly addresses the customer's inquiry), the greater will be the customer's satisfaction with the product and its support infrastructure. However, research has shown that end-users often spend a significant amount of time collecting data, such as KB article(s), attempting to locate on-point articles to their troubleshooting inquiries. One reason for this is because conventional product support infrastructures often deal with single cause problems, but lack multiple cause product problem diagnosis knowledge representations. To address this limitation, the following systems and methods mine, analyze, and organize unstructured product support service (PSS) log service requests for product support based on interrelated clusters of structured data objects. The structured data objects include historical single and multiple product problem diagnosis data.

In particular, user generated context and links/references to product support (PS) articles are extracted from a PSS log of unstructured service requests. The extracted information is textually analyzed and organized into clusters of interrelated structured data objects according to feature relevance. For instance, link information may be relatively spare as compared to other service request content. However, when two service requests cite a same KB article, it is probable that the two service requests correspond to the same problem and cause. After analysis and clustering, the structured objects include some combination of product problem symptoms, causes, resolutions, links/citations to related PS documents, and references to any other related data objects. These clusters of hierarchically structured data objects are used to generate the troubleshooting wizard.

The troubleshooting wizard, in view of a symptom or problem description for a given product, provides a user with directed organized interaction with the structured data objects for problem diagnosis and resolution. In particular, the troubleshooting wizard allows end-users to systematically leverage the hierarchically structured historical data objects to match/identify their product problem symptom, or description, with corresponding problem cause(s) and resolution(s). These and other aspects of the systems and methods to mine service requests for product support are now described in greater detail.

### An Exemplary System

Turning to the drawings, wherein like reference numerals refer to like elements, the systems and methods are described and shown as being implemented in a suitable computing environment. Although not required, the invention is described in the general context of computer-executable instructions, such as program modules, being executed by a personal computer. Program modules generally include routines, programs, objects, components, data structures, etc., that perform particular tasks or implement particular abstract data types. While the systems and methods are described in the foregoing context, acts and operations described hereinafter may also be implemented in hardware.

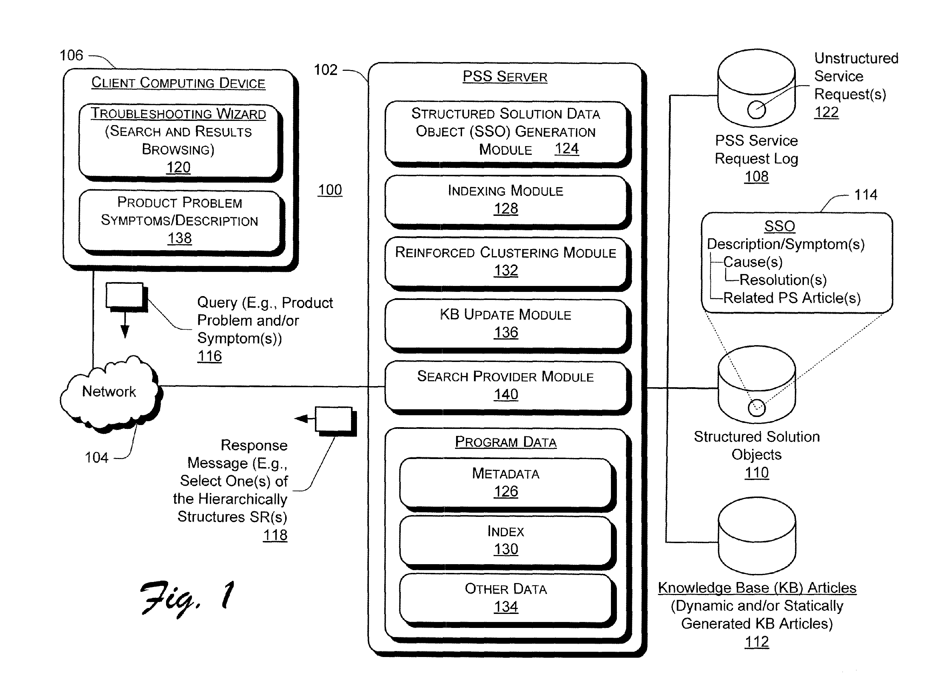

Fig. 1 shows an exemplary system 100 for mining service requests for product support. In this implementation, system 100 includes product support service (PSS) server 102 coupled across a communications network 104 to client computing device 106. Network 104 may include any combination of a local area network (LAN) and a general wide area network (WAN) communication environments, such as those which are commonplace in offices, enterprise-wide computer networks, intranets, and the Internet. PSS server 102 is coupled to the following data repositories: PSS service request (SR) log 108, clustered and hierarchically structured answer data objects 110, and KB article(s) 112. Client computing device 106 is any type of computing device such as a personal computer, a laptop, a server, a mobile computing device (e.g., a cellular phone, personal digital assistant, or handheld computer), etc.

PSS server 102 mines PSS service request log 108 to generate clusters of hierarchically organized and structured answer data objects (SAOs) 110. Each SAO 110 includes historical, single and/or multiple problem, product problem diagnosis data. Such diagnosis data is organized by PSS server 102 into a hierarchical tree as a function of one or more of problem description/symptom(s), result(s), causes(s), and resolution(s) diagnosis data, for example as shown in callout 114. As described below, responsive to receipt by the PSS server of a problem description/symptom query 116 from the client computing device 106, respective ones of these structured answer data objects 110 are sent in a response message 118 by the PSS server 102 to the client computing device 106. The structured answer data objects 110 communicated to the client computing device 106 correspond to terms of the query 116. An end-user client of computing device 106 uses troubleshooting wizard 120 to systematically present and leverage the historical product problem diagnosis data encapsulated by the communicated structured answer data objects 110 to identify at least the problem's corresponding cause(s) and associated resolution(s). Prior to describing how troubleshooting wizard 120 presents such hierarchically structured historical product problem diagnosis data to an end-user for problem resolution, we first describe how structured answer data objects 110 are generated in the by the PSS server 102.

### Structured Answer data objects

Each entry logged in PSS service request log 108 is the result of end-user and product support engineer/staff product problem diagnosis, troubleshooting, and resolution probing communication processes. Such product problem diagnosis and resolution communications are informal (i.e., not based on information solely generated by a professional writer or vendor tasked with documenting a product), and often include a set of unstructured questions and answers directed to narrowing down product problem symptom to a root cause. The questions may include some combination of product name, problem context such as problem description, symptoms, causes, resolution(s), and/or the like. Support engineer/staff responses may include some combination of relevant system and product problem diagnosis/probing questions, a cause, and/or a solution to the problem. The support/staff responses may also include links/references to PS articles (e.g., knowledge base (KB) article(s) 112) that are relevant to the particular problem resolution process. Such links/references often include, for example, substantially unique document IDs, hypertext links, Universal Resource Identifiers (URIs), document titles, and/or so on. These informal communications between the end-user and product support engineer(s)/staff are hereinafter referred to as unstructured service requests 122.

To mine the PSS service request log 108, structured answer object (SAO) generation module 124 extracts product problem context and resolution information from respective ones of the unstructured service requests 122. Such extracted information in its intermediate data format is shown as metadata 126, and includes for example, any combination of product name, problem context such as problem description, symptoms, causes, resolution(s), product problem diagnosis/probing questions, cause(s), solution(s), link(s)/reference(s) data to one or more PS articles, and/or the like. SAO generation module 124 aligns related symptom(s), results(s), cause(s), resolution(s), question/answer pairs, related KB articles, and so on, from the metadata 126 to form structured answer objects 110. A single SAO 110 is generated from a single service request, so an SAO 110 represents a one-problem-one-cause-one-solution structure. A hierarchical one-problem-to-multiple-cause-multiple-solution is provided by clustering multiple SAOs 110 together, as described below in paragraphs [0022], [0023], and [0024].

To facilitate search and retrieval across SAOs 110 in view of a set of problem description terms, indexing module 128 creates index 130. To this end, indexing module 128 extracts terms and keyphrases from SAOs 110, performs statistical and session-based feature selection to assign appropriate weight to extracted features, and normalizes terminology within the SAOs 110. In particular, a feature extraction portion of indexing module 128 performs extracts features such as terms, phrases, and/or sentences from the structured answer objects 110. Statistical information is used to perform this extraction. For instance, in one implementation, if a word appears many times in a first document (SAO) and appears little or not at all in a second (different) document, then the particular word is determined to be a term in the first document. Mutual information is used to calculate keyphrases. For example, when two terms frequently appear adjacent with respect to one-another in a document, then the two terms are combined to generate a phrase. Such extracted term and phrase features are represented with a respective portion of index 130. In one implementation, indexing module 128 augments one or more of the extracted features with semantic data such as with synonyms.

Next, indexing module 128 performs statistical and session based selection (feature selection) of the extracted features to select and assign high weights to the substantially most important tokens. Statistical feature selection treats a document as a flat structure, i.e. a bag of words, to perform simple term statistics such as term frequency. Session-based feature selection utilizes the internal structure of the service requests. For example, service requests can be seen as a tree structure of multiple messages, with each node being the reply message of its parent node. This tree structure is used to enhance feature selection. Feature selection operation results are represented with a respective portion of index 130. Exemplary feature selection algorithm(s) is/are based on DF, IG, MI, CHI, with a focus on aggressive dimensionality reduction, as described, for example, in "A Comparative Study on Feature Selection in Text Categorization", Yang and Pederson, 1997.

Next, indexing module 128 transforms, or normalizes the extracted features. Such normalization converts terms to a consistent format for instance between engineers and between customers and engineers. For example, in one implementation, the term "corrupt" may be mapped as being similar to the term "damaged", the term "WINDOWS XP" mapped to the term "Win XP", and/or the like. Term normalization is described, for example, in "Building a Web Thesaurus from Web Link Structure", SIGIR-03, July-August 2003, which is hereby incorporated by reference. Results of term normalization are represented with a respective portion of index 130.

### A Unified Framework for SAO 110 Classifications and Clustering

Reinforced clustering module 132, using information from index 130, organizes the SAOs 110 into semantic clusters based on their content and link features. For instance, although link information may be relatively sparse as compared to other SAO content, when multiple SAOs 110 cite a same KB article 112, it is probable that the multiple SAOs 110 correspond to a same problem and cause. In this scenario, reinforced clustering module 132 cross references the multiple SAOs 110 as being related. In particular, reinforced clustering module 132 calculates similarity of SAO 110 (document/object) pairs using a mutual reinforcement clustering algorithm to iteratively cluster each SAO's features to a lower dimensional feature space. SAO 110 similarity calculations are based on tf*idf, which is a well-known weighting algorithm that normalizes term/feature weights. Exemplary techniques for reinforced clustering are described "Reinforcement Clustering of Multi-Type Interrelated Data Objects", as described below in Appendix A. After analysis and clustering of related SAOs 110, related SAOs 110 are clustered together into troubleshooting wizard 120, as described below, and the indexes are stored in index 130.

Semi-supervised learning methods construct classifiers using both labeled and unlabeled training data samples. While unlabeled data samples can help to improve the accuracy of trained models to certain extent, existing methods still face difficulties when labeled data is not sufficient and biased against the underlying data distribution. To address this limitation of conventional clustering methods, in one implementation, clustering module 132 unifies its reinforced clustering operations with additional clustering analysis, such as that generated by a human being. This forms a unified framework for clustering and classification of SAOs 110.

For instance, in one implementation, clustering based classification (CBC) operations of the reinforced clustering module 132 first clusters training data, including both the labeled and unlabeled data with the guidance of the labeled data. Some of unlabeled data samples are then labeled based on the clusters obtained. Discriminative classifiers are then subsequently trained with the expanded labeled dataset. For purposes of illustration, such training samples, expanded label dataset(s), clusters, and so on, are represented by respective portions of other data 134. Exemplary techniques for using CBC to perform such unified clustering are described by "CBC: Clustering Based Text Classification Requiring Minimal Labeled Data", by Hua-Jun Zeng et al., November 19-22, 2003, ICDM-03 (2003 IEEE International Conference on Data Mining), Melbourne, Florida, USA, which is hereby incorporated by reference.

### Exemplary Knowledge Base Updating

In one implementation, knowledge base (KB) update module 136 dynamically generates a KB article 112 from one or more SAOs 110. A statically generated KB article is one that is manually generated, for example, by a human being. A dynamically generated KB article 112 is one that is automatically generated by KB update module 136 and comprises information from the corresponding one(s) of the SAOs 110 ― hierarchically structured historical problem diagnosis data compiled by SAO generation module 124 from product end-user(s) and support engineers/staff When multiple SAOs 110 are used to generate a KB article, the multiple SAOs 110 represent a reinforced cluster of SAOs 110 ― as indicated by index 130.

More particularly, SAOs 110 are grouped together to generate troubleshooting wizard 120 when they have the same problem description, as described above in paragraphs [0031], [0032], and [0033]. The frequency of this clustering is the count of SAOs 110 grouped into the troubleshooting wizard 120. Additionally, SAOs 110 with same causes are further clustered into sub-groups, with the frequency of each sub-group being the count of SAOs 110 clustered into the respective subgroup. If the size of the "wizard" (i.e., the set of SAO's used to generate the troubleshooting wizard 120) is large enough, i.e. the frequency of the whole wizard and the frequencies of all sub-group exceed a certain threshold, a new (enhanced) KB article 112 is created.

### An Exemplary Product Problem Troubleshooting Wizard

In this implementation, client computing device 106 includes troubleshooting wizard 120 to allow an end-user of the client computer 106 to systematically present and leverage hierarchically structured historical product problem diagnosis data from structured answer data objects 110 in view of a given product problem symptom or description. Such presentation allows the end-user to identify a problem's corresponding cause(s) and associated resolution(s). To these ends, a user inputs a text-based symptom or problem description 138 for a computer-program application, or product (e.g., browser, word processing application, and/or any other type of computer programming application) into troubleshooting wizard 120 (e.g., via a user interface (UI) control). Troubleshooting wizard 120 generates query 116 comprising a product problem description and/or symptom(s) 138, and communicates query 116 to search provider module 140 of the PSS server 102 over network 104.

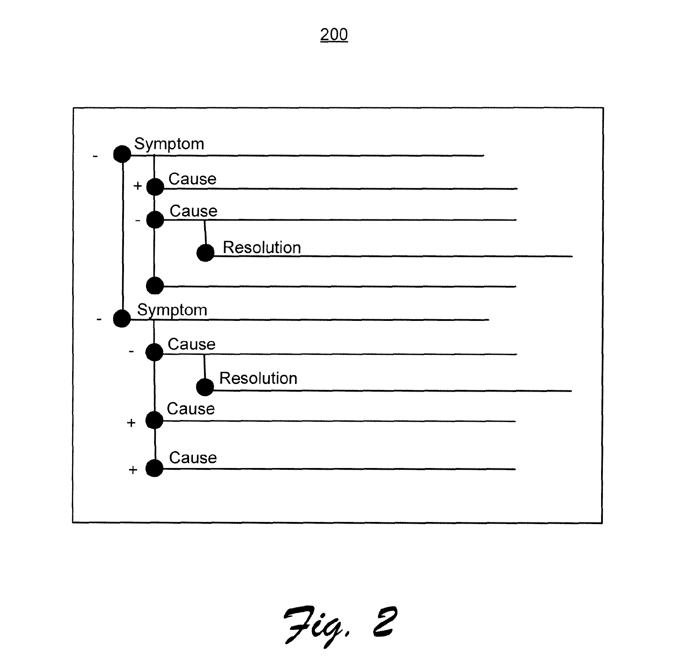

Responsive to receiving query 116, search provider 140 performs a full-text search of index 130 to identify one or more SAOs 110 for terms and/or phrases associated with term(s) in query 116. In one implementation, such term(s) and/or phrase(s) will have a substantially high objective relevance (weighting) to a query term, and may be used to determine that one SAO 110 is more relevant to the query 116 than another SAO 110. Responsive to locating one or more relevant SAOs 110, search provider 140 communicates the one or more SAOs 110 back to the client computing device 106, for example, via response message 118. Responsive to receiving the one or more SAOs 110, troubleshooting wizard 120 extracts the historical, single and/or multiple problem product problem diagnosis data from the one or more SAOs 110. Troubleshooting wizard 120 presents this extracted information to the end-user of the client computing device 106, for example, as shown in Fig. 2.

Fig. 2 shows an exemplary troubleshooting wizard user interface (UI) 200 to present hierarchically structured historical problem diagnosis data from SAOs 110 to a user for selective product problem diagnoses interaction. As shown in UI 200, for a given product problem symptom/description 138, UI 200 presents one or more corresponding symptoms, causes, resolutions, and/or other information, each of which have been extracted from one or more SAOs 110 encapsulated by response message 118. KB articles 112 related to a symptom are an aggregation of the related KB articles of its sub-cause/resolution, with frequencies being summed up.

Although UI 200 shows a certain number of symptom, cause, and/or resolution data sets, there can be any number of such data as a function of the particular problem 138 being addressed and the content of the SAOs 110. The troubleshooting wizard 120 leverages the internal data representation of the SAO(s) 110 embedded in response 118 to present each symptom, cause, and resolution data set in a respective hierarchical tree structure. In this tree, each symptom parent node has one or more cause child nodes. Each cause node, in turn, is a parent node for one or more resolution child nodes. For purposes of selective presentation of the information in UI 200, in this implementation, "+" and "-" punctuation marks are shown to the left of respective symptom and cause nodes. The "+" and "-" marks represent selectable UI objects allowing a user to selectively expand and/or collapse information associated with the corresponding structured answer object nodes.

The troubleshooting wizard 120, in view of a symptom or problem description 138 for a given product, provides a user via UI 200 with directed organized interaction with the historical problem diagnosis data from the response 118 for problem diagnosis and resolution. Thus, troubleshooting wizard 120 allows end-users to systematically leverage the hierarchically structured historical data objects to match/identify their product problem symptom, or description, with corresponding problem cause(s) and resolution(s).

### An Exemplary Procedure

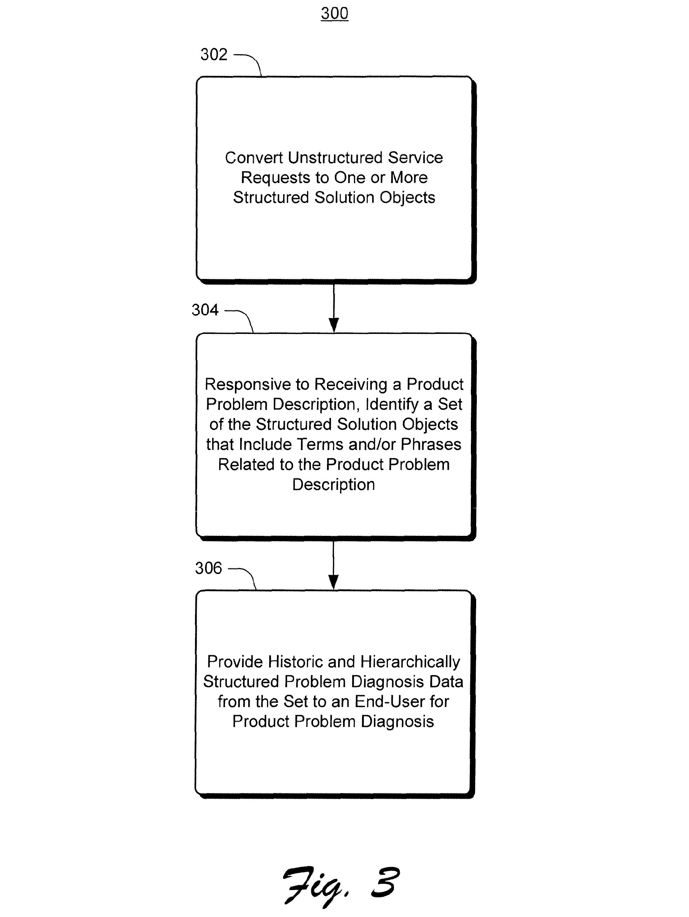

Fig. 3 illustrates an exemplary procedure 300 for a product support service server to mine service requests for product support. For purposes of discussion, operations of the procedure are discussed in relation to the components of Fig. 1. (All reference numbers begin with the number of the drawing in which the component is first introduced). At block 302, product support service (PSS) server 102 (Fig. 1) converts unstructured service requests 122 from PSS service requests log 108 into one or more structured answer objects 110. At block 304, PSS server 102, responsive to receiving a product problem description 138 in a request message 116, identifies a set of the structured answer objects 110 that includes terms and/or phrases related to the product problem description 138. At block 306, PSS server 102 provides historic and hierarchically structured problem diagnosis data from the set to an end-user for product problem diagnosis. In one implementation, this is accomplished by communicating response message 118 to client computing device 106. In another implementation, this is performed by knowledge base update module 136, which dynamically generates a knowledge base article 112 from information in the set.

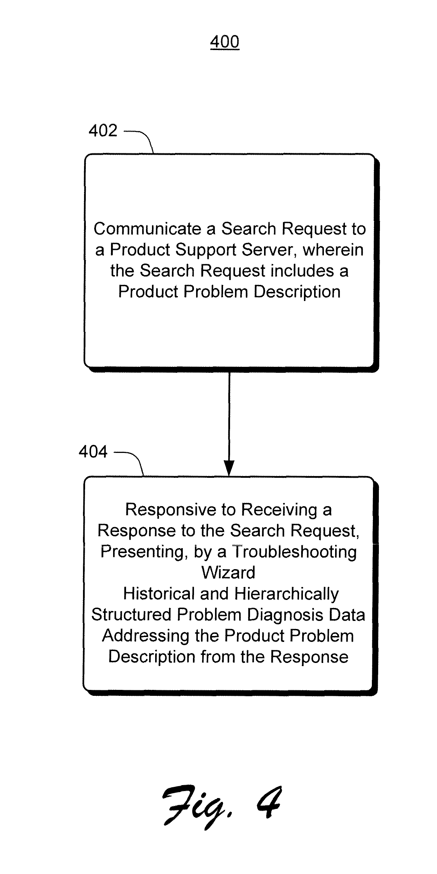

Fig. 4 illustrates an exemplary procedure 400 for a client computing device to present structured answer objects in a troubleshooting wizard to provide an end-user with product support. For purposes of discussion, operations of the procedure are discussed in relation to the components of Fig. 1. (All reference numbers begin with the number of the drawing in which the component is first introduced). At block 402, client computing device 106 communicates a search request (query 116 of Fig. 1) to PSS server 102. The search request includes a product problem description 138. At block 404, responsive receiving a response message 118 to the search request, the client computing device 106 presents a troubleshooting wizard 120 to present historical and hierarchically structured problem diagnosis data addressing the product problem description 138. An exemplary presentation is shown in Fig. 2.

### An Exemplary Operating Environment

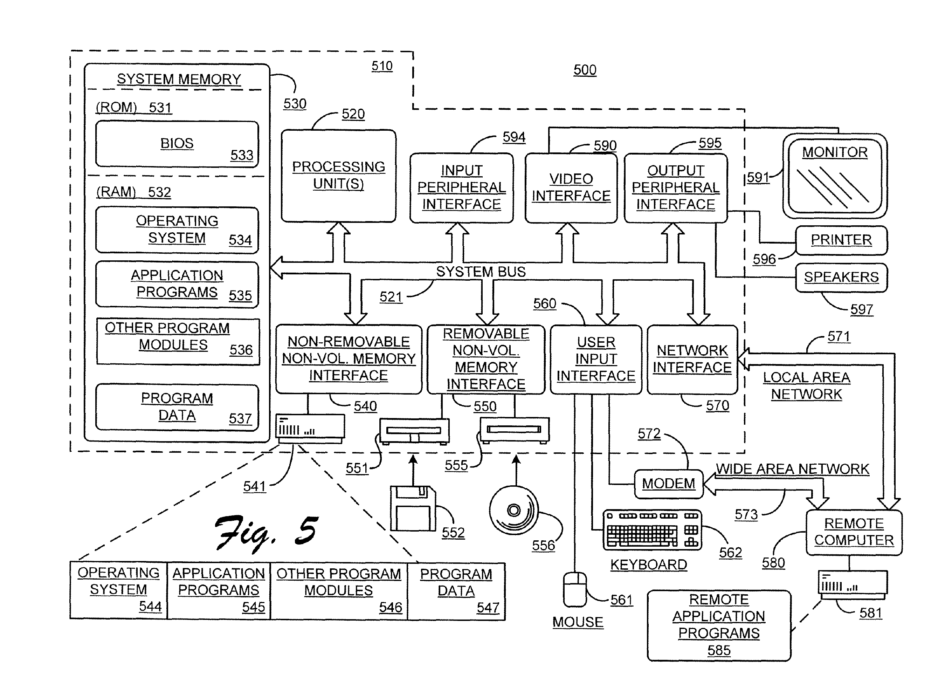

Fig. 5 illustrates an example of a suitable computing environment 500 on which the system 100 of Fig. 1 and the methodology of Figs. 3 and 4 for mining service requests for product support may be fully or partially implemented. Exemplary computing environment 500 is only one example of a suitable computing environment and is not intended to suggest any limitation as to the scope of use or functionality of systems and methods the described herein. Neither should computing environment 500 be interpreted as having any dependency or requirement relating to any one or combination of components illustrated in computing environment 500.

The methods and systems described herein are operational with numerous other general purpose or special purpose computing system environments or configurations. Examples of well-known computing systems, environments, and/or configurations that may be suitable for use include, but are not limited to, personal computers, server computers, multiprocessor systems, microprocessor-based systems, network PCs, minicomputers, mainframe computers, distributed computing environments that include any of the above systems or devices, and so on. Compact or subset versions of the framework may also be implemented in clients of limited resources, such as handheld computers, or other computing devices. The invention is practiced in a distributed computing environment where tasks are performed by remote processing devices that are linked through a communications network. In a distributed computing environment, program modules may be located in both local and remote memory storage devices.

With reference to Fig. 5, an exemplary system for mining service requests for product support includes a general purpose computing device in the form of a computer 510. The following described aspects of computer 510 are exemplary implementations of client computing device PSS server 102 (Fig. 1) and/or client computing device 106. Components of computer 510 may include, but are not limited to, processing unit(s) 520, a system memory 530, and a system bus 521 that couples various system components including the system memory to the processing unit 520. The system bus 521 may be any of several types of bus structures including a memory bus or memory controller, a peripheral bus, and a local bus using any of a variety of bus architectures. By way of example and not limitation, such architectures may include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

A computer 510 typically includes a variety of computer-readable media. Computer-readable media can be any available media that can be accessed by computer 510 and includes both volatile and nonvolatile media, removable and non-removable media. By way of example, and not limitation, computer-readable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 510.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example and not limitation, communication media includes wired media such as a wired network or direct-wired connection, and wireless media such as acoustic, RF, infrared and other wireless media. Combinations of the any of the above should also be included within the scope of computer-readable media.

System memory 530 includes computer storage media in the form of volatile and/or nonvolatile memory such as read only memory (ROM) 531 and random access memory (RAM) 532. A basic input/output system 533 (BIOS), containing the basic routines that help to transfer information between elements within computer 510, such as during start-up, is typically stored in ROM 531. RAM 532 typically contains data and/or program modules that are immediately accessible to and/or presently being operated on by processing unit 520. By way of example, and not limitation, Fig. 5 illustrates operating system 534, application programs 535, other program modules 536, and program data 537. In one implementation, wherein computer 510 is a PSS server 102. In this scenario, application programs 535 comprise structured solution data object generation module 124, reinforced clustering module 132, indexing module 128, search provider module 140, and knowledge base (KB) update module 136. In this same scenario, program data 537 comprises metadata 126, index 130, other data 134, and response message 118. In another implementation, wherein computer 510 is a client computing device 106 of Fig. 1, application programs 535 comprise troubleshooting wizard 120. In this same scenario, program data 537 comprises query 116, and product problem symptoms/description 138.

The computer 510 may also include other removable/non-removable, volatile/nonvolatile computer storage media. By way of example only, Fig. 5 illustrates a hard disk drive 541 that reads from or writes to non-removable, nonvolatile magnetic media, a magnetic disk drive 551 that reads from or writes to a removable, nonvolatile magnetic disk 552, and an optical disk drive 555 that reads from or writes to a removable, nonvolatile optical disk 556 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 541 is typically connected to the system bus 521 through a non-removable memory interface such as interface 540, and magnetic disk drive 551 and optical disk drive 555 are typically connected to the system bus 521 by a removable memory interface, such as interface 550.

The drives and their associated computer storage media discussed above and illustrated in Fig. 5, provide storage of computer-readable instructions, data structures, program modules and other data for the computer 510. In Fig. 5, for example, hard disk drive 541 is illustrated as storing operating system 544, application programs 545, other program modules 546, and program data 547. Note that these components can either be the same as or different from operating system 534, application programs 535, other program modules 536, and program data 537. Operating system 544, application programs 545, other program modules 546, and program data 547 are given different numbers here to illustrate that they are at least different copies.

A user may enter commands and information into the computer 510 through input devices such as a keyboard 562 and pointing device 561, commonly referred to as a mouse, trackball or touch pad. Other input devices (not shown) may include a microphone, joystick, game pad, satellite dish, scanner, or the like. These and other input devices are often connected to the processing unit 520 through a user input interface 560 that is coupled to the system bus 521, but may be connected by other interface and bus structures, such as a parallel port, game port or a universal serial bus (USB).

A monitor 591 or other type of display device is also connected to the system bus 521 via an interface, such as a video interface 590. In addition to the monitor, computers may also include other peripheral output devices such as speakers 597 and printer 596, which may be connected through an output peripheral interface 595.

The computer 510 operates in a networked environment using logical connections to one or more remote computers, such as a remote computer 580. The remote computer 580 may be a personal computer, a server, a router, a network PC, a peer device or other common network node, and as a function of its particular implementation, may include many or all of the elements described above relative to the computer 510, although only a memory storage device 581 has been illustrated in Fig. 5. The logical connections depicted in Fig. 5 include a local area network (LAN) 571 and a wide area network (WAN) 573, but may also include other networks. Such networking environments are commonplace in offices, enterprise-wide computer networks, intranets and the Internet.

When used in a LAN networking environment, the computer 510 is connected to the LAN 571 through a network interface or adapter 570. When used in a WAN networking environment, the computer 510 typically includes a modem 572 or other means for establishing communications over the WAN 573, such as the Internet. The modem 572, which may be internal or external, may be connected to the system bus 521 via the user input interface 560, or other appropriate mechanism. In a networked environment, program modules depicted relative to the computer 510, or portions thereof, may be stored in the remote memory storage device. By way of example and not limitation, Fig. 5 illustrates remote application programs 585 as residing on memory device 581. The network connections shown are exemplary and other means of establishing a communications link between the computers may be used.

### Conclusion

Although the systems and methods for mining service requests for product support have been described in language specific to structural features and/or methodological operations or actions, it is understood that the implementations defined in the appended claims are not necessarily limited to the specific features or actions described. For instance, although troubleshooting wizard 120 of Fig. 1 has been shown as being associated with client computing device 106, troubleshooting wizard 120 could also be implemented on the server computer 102. Accordingly, the specific features and actions are disclosed as exemplary forms of implementing the claimed subject matter.

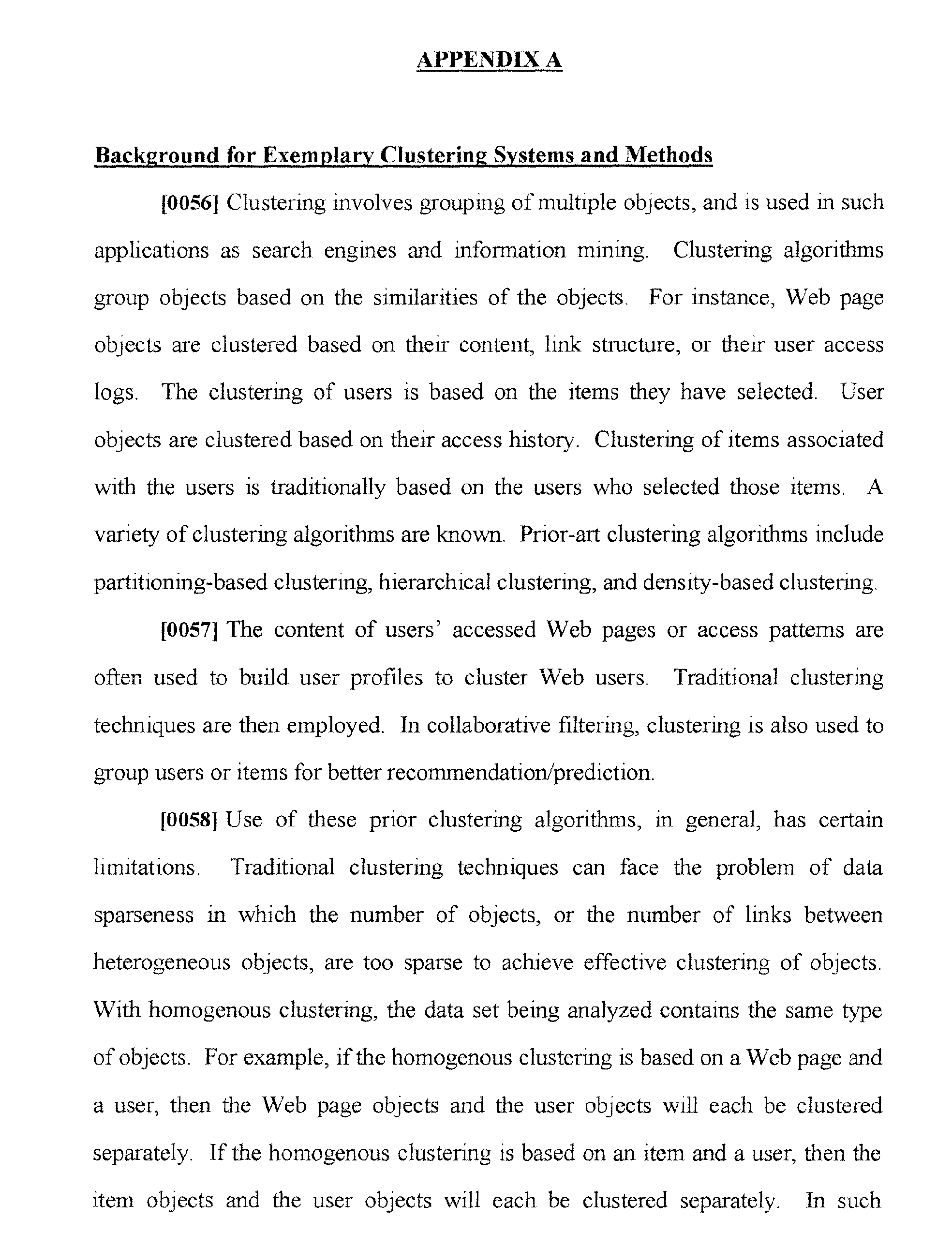

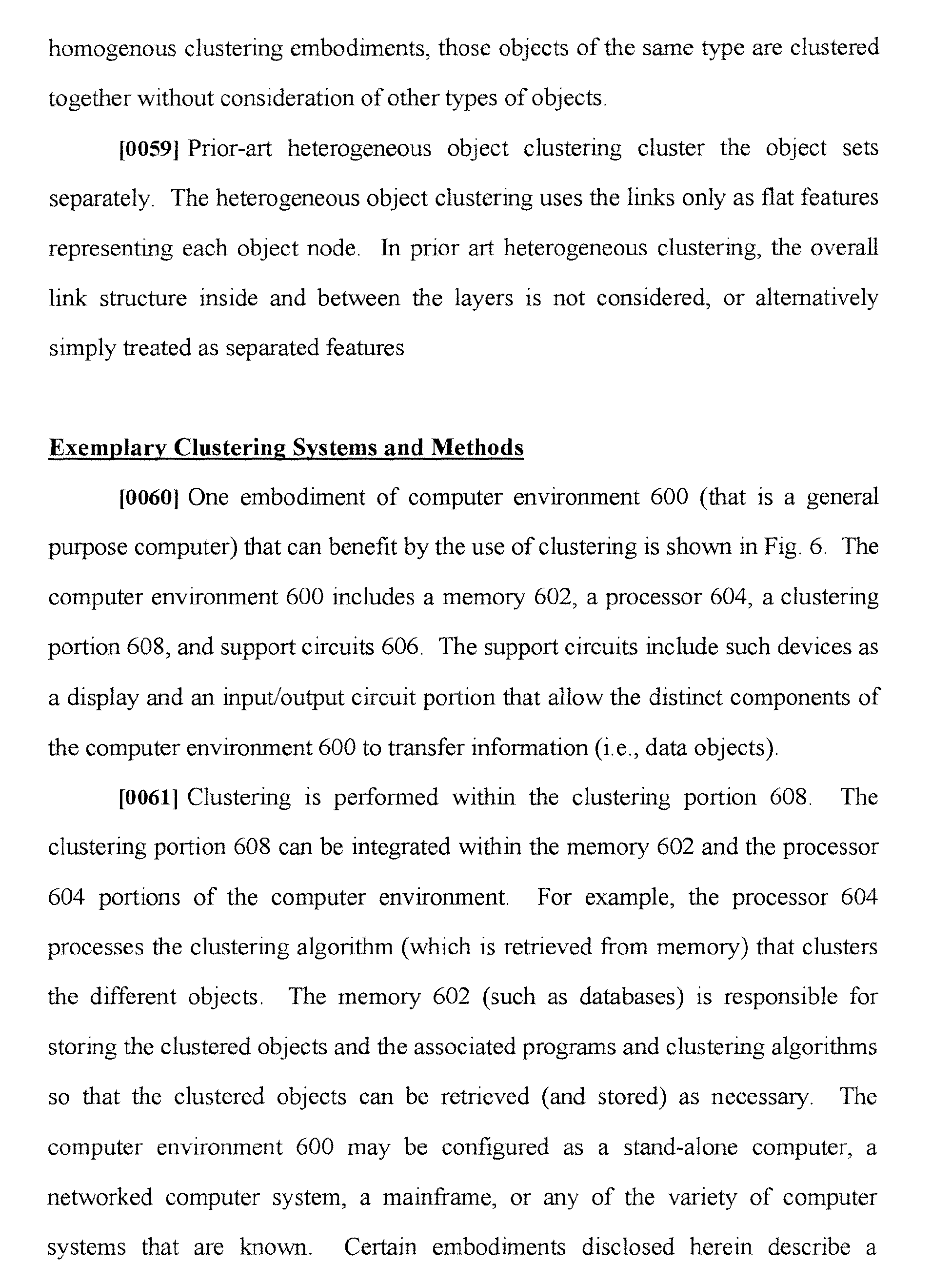

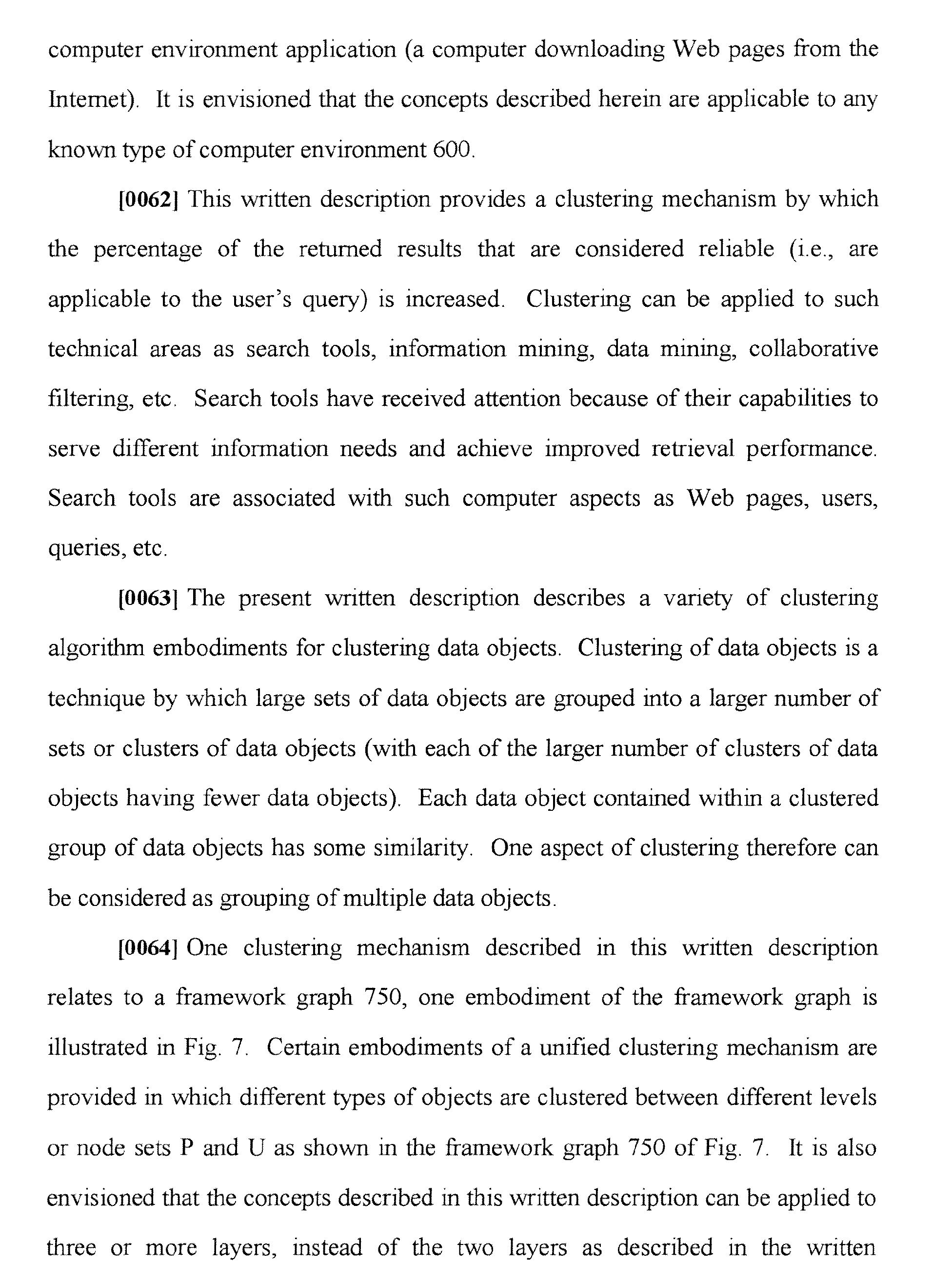

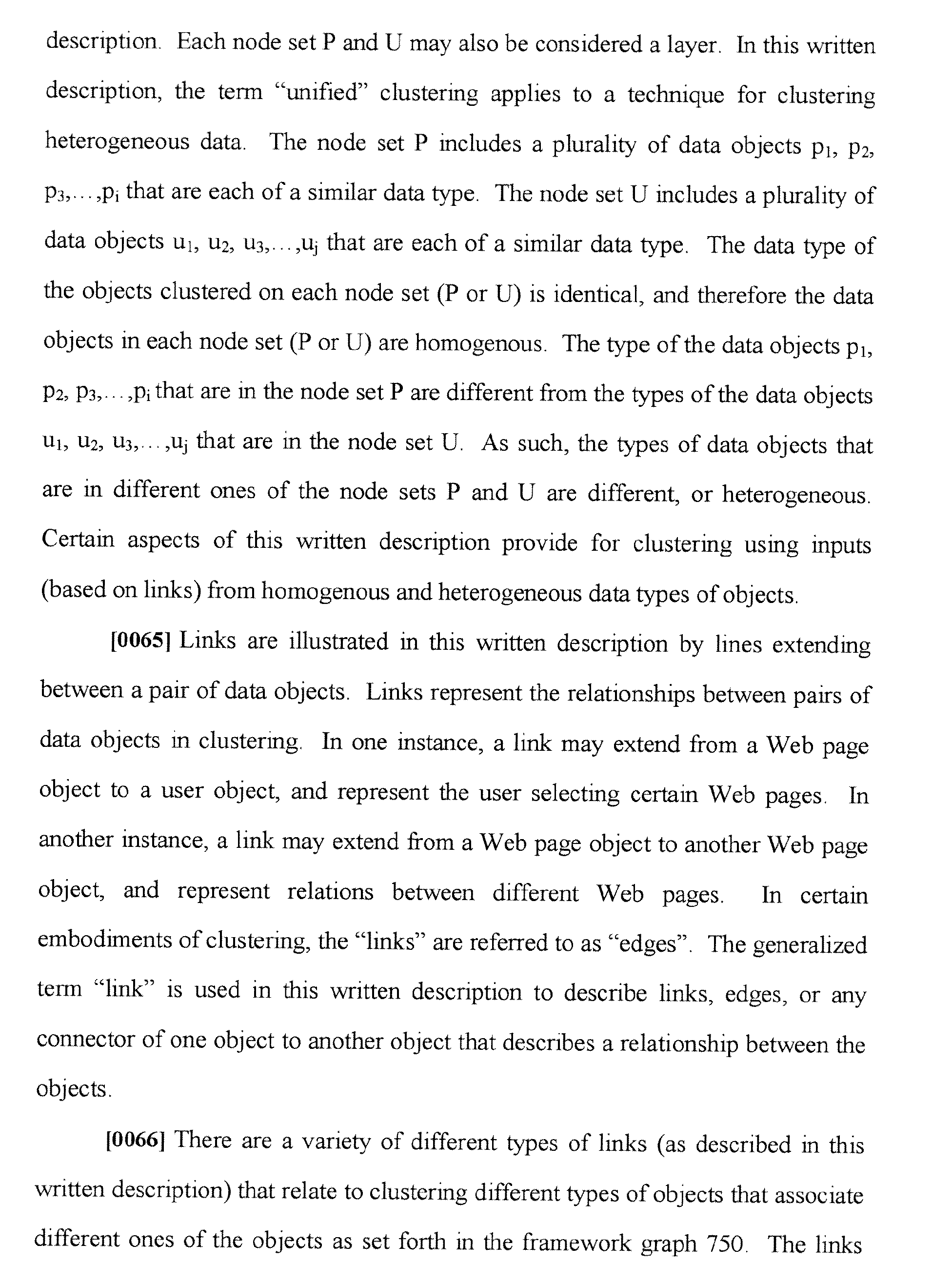

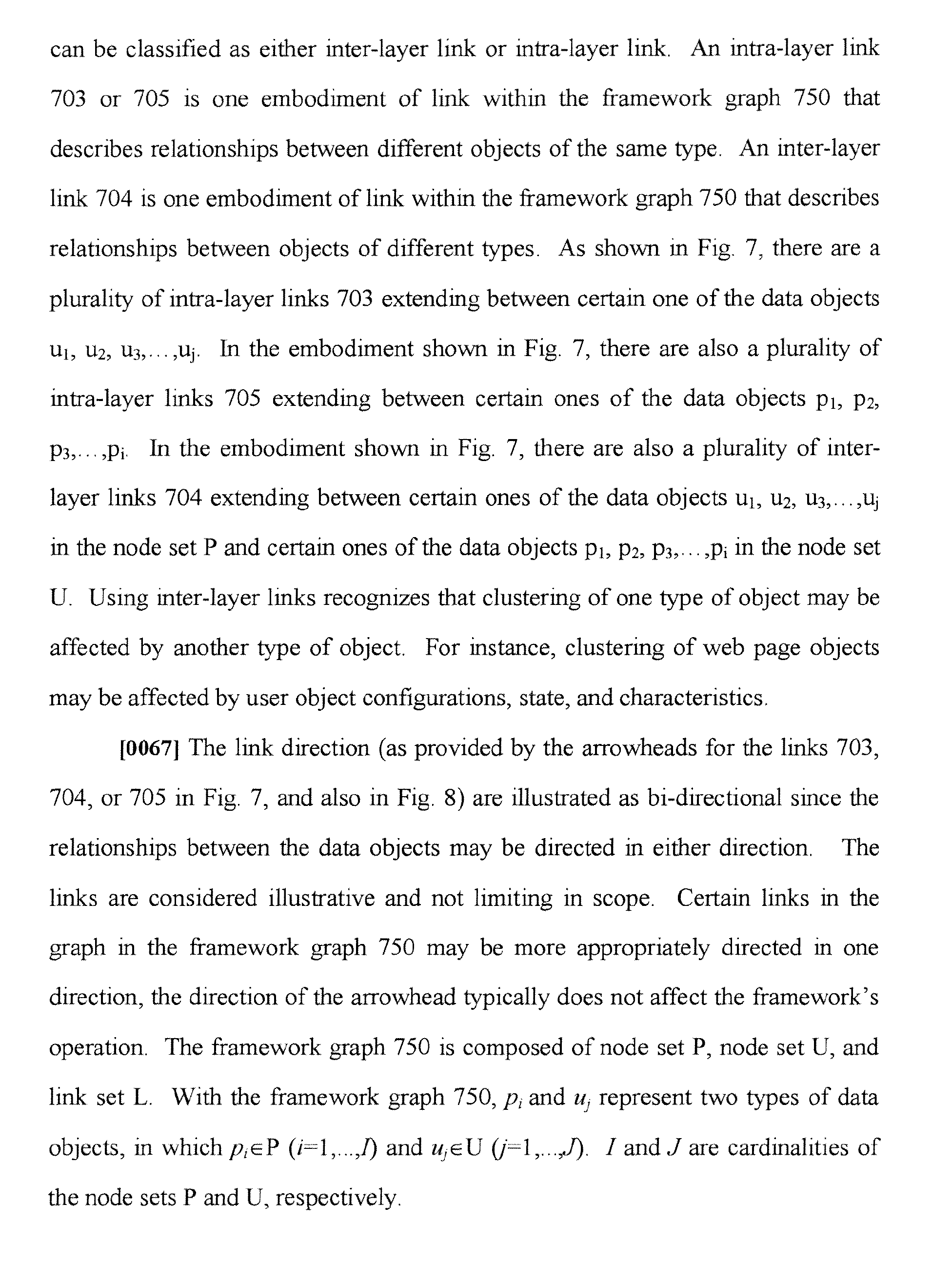

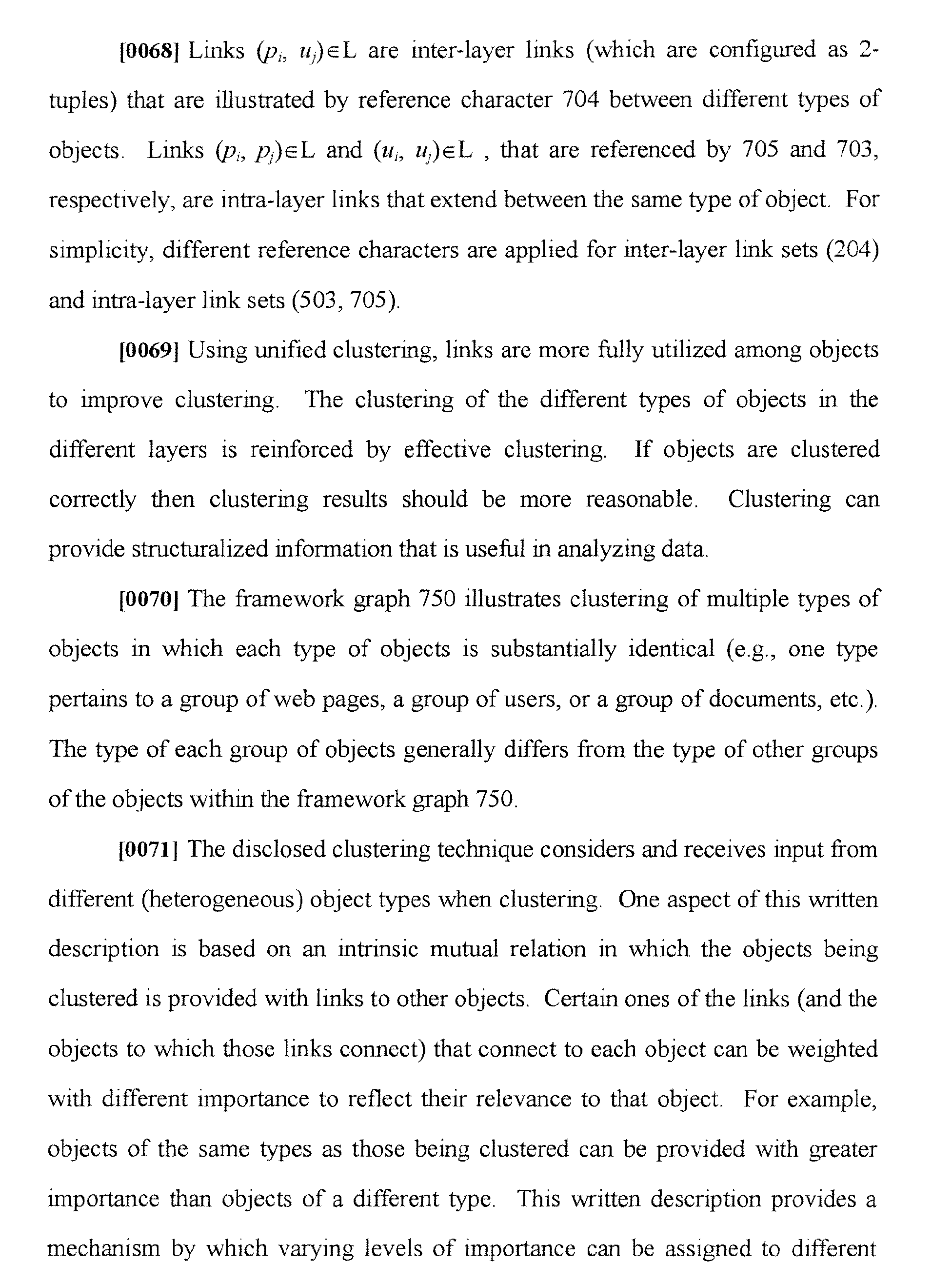

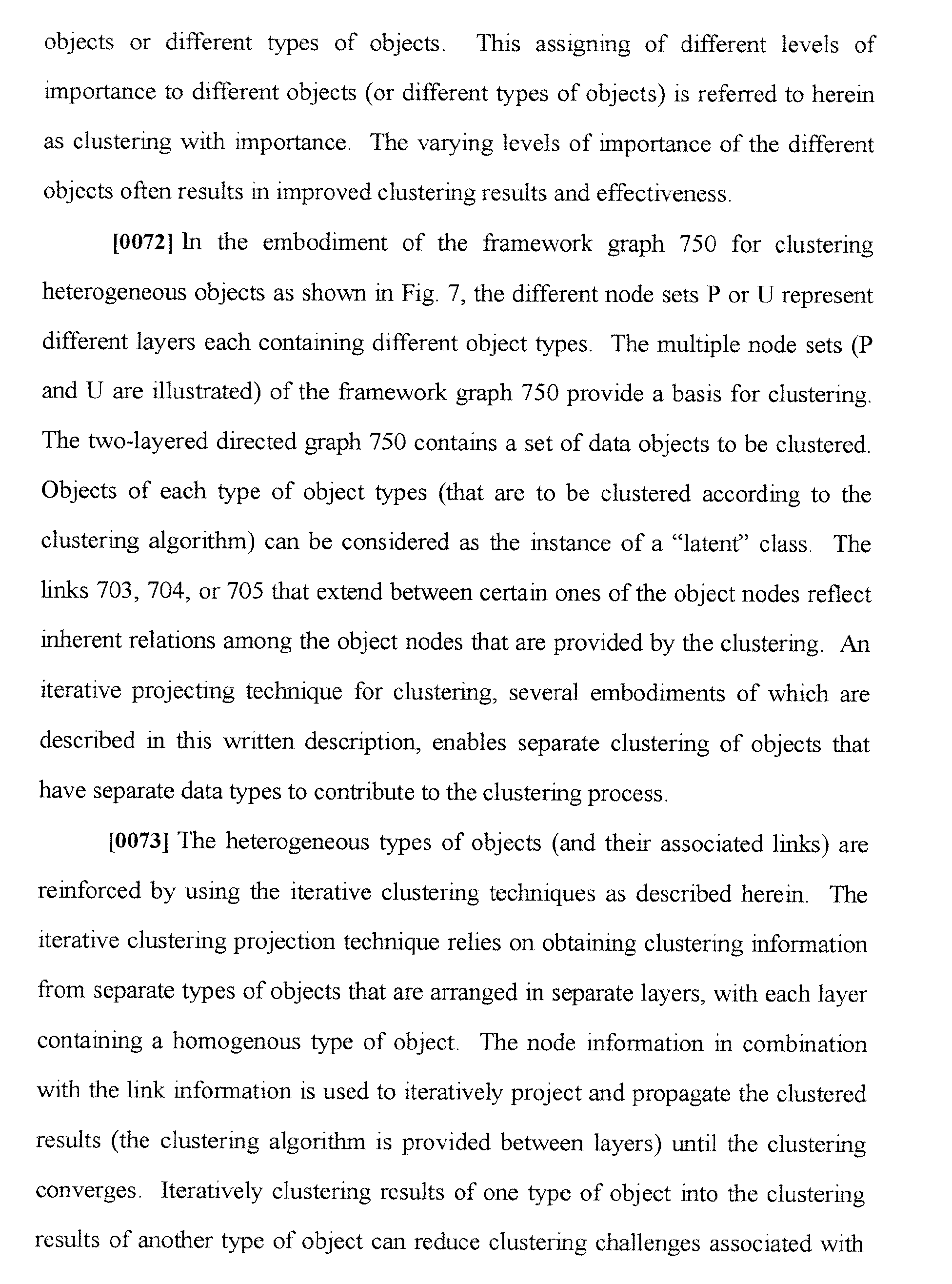

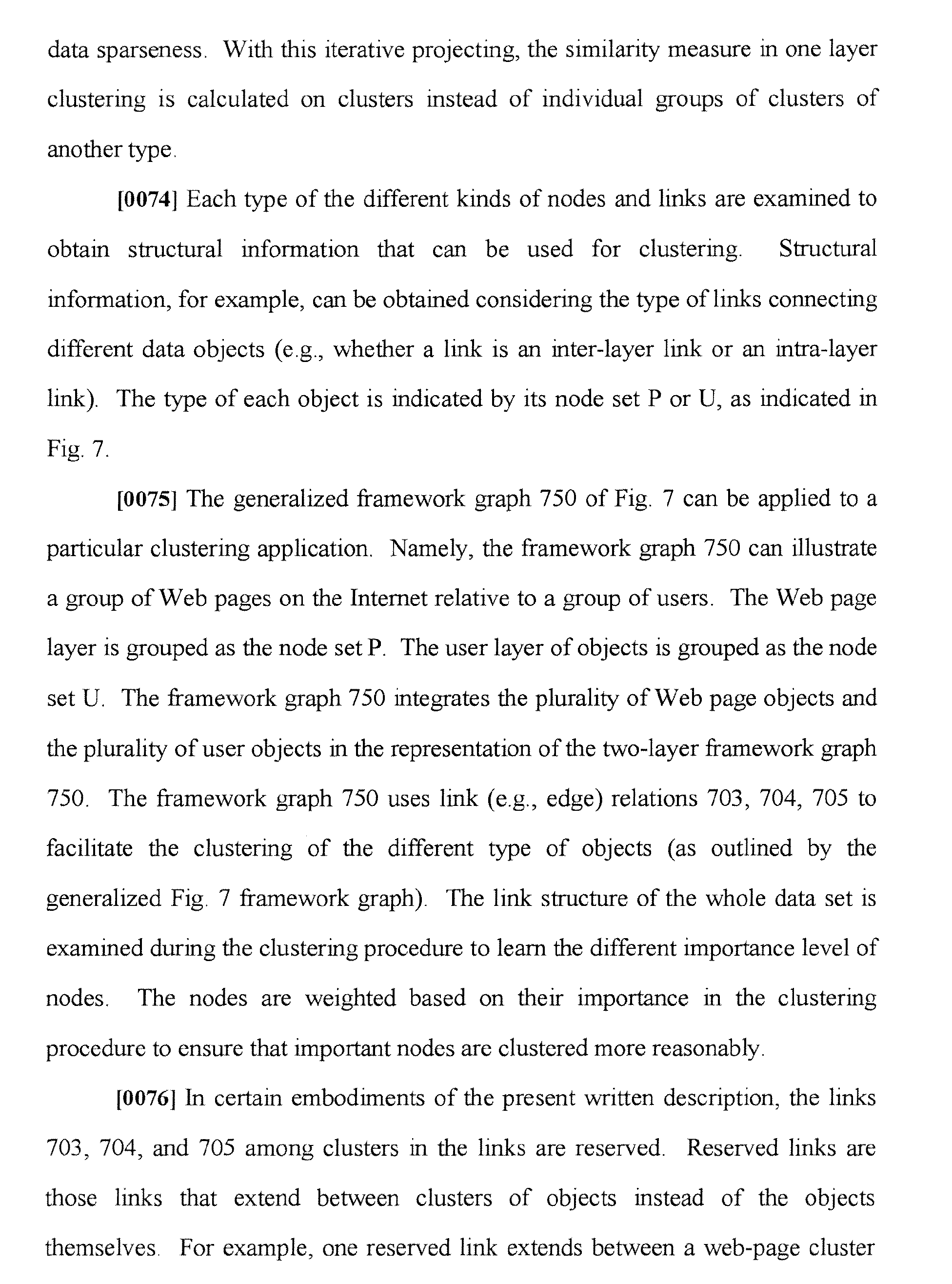

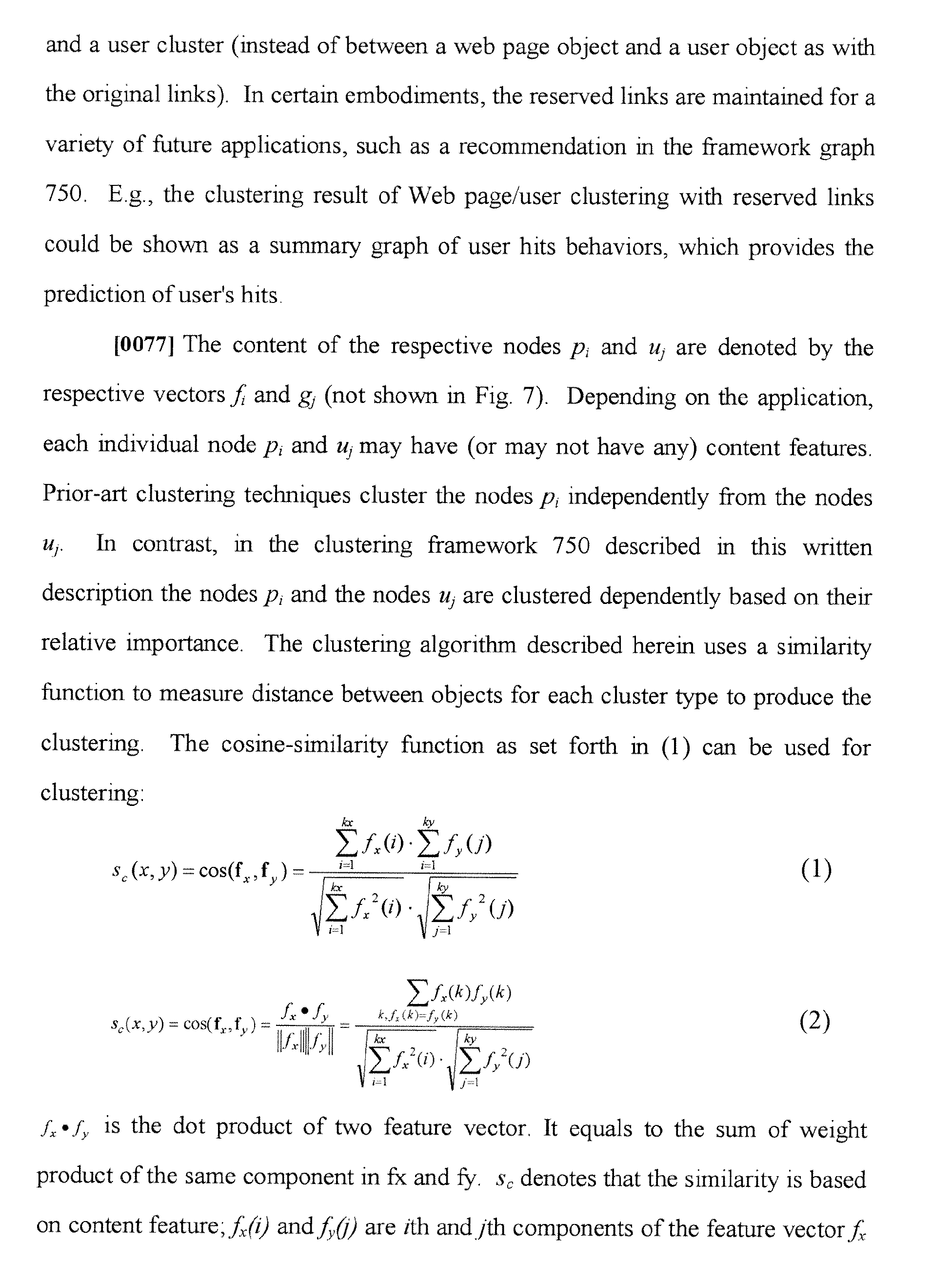

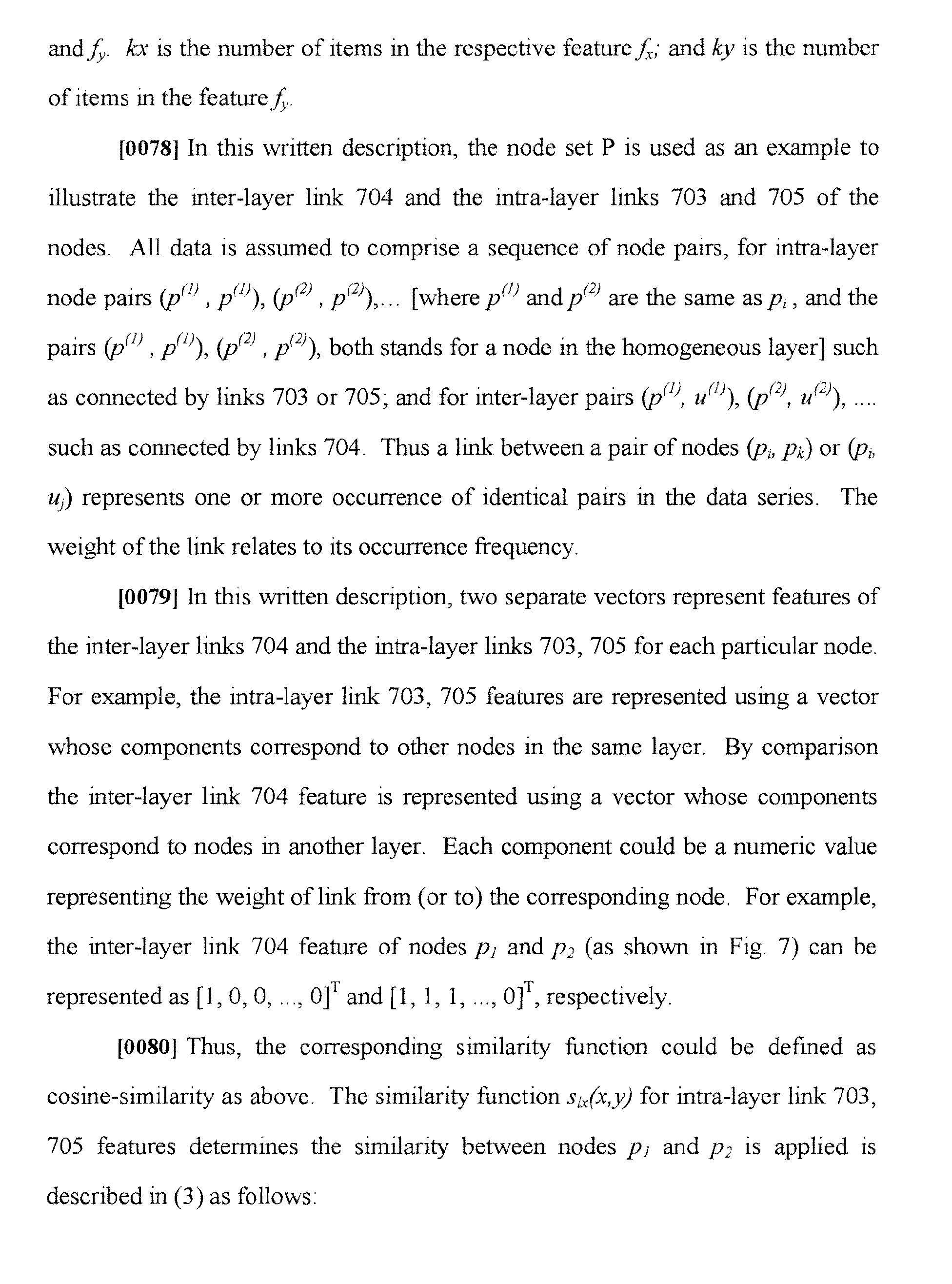

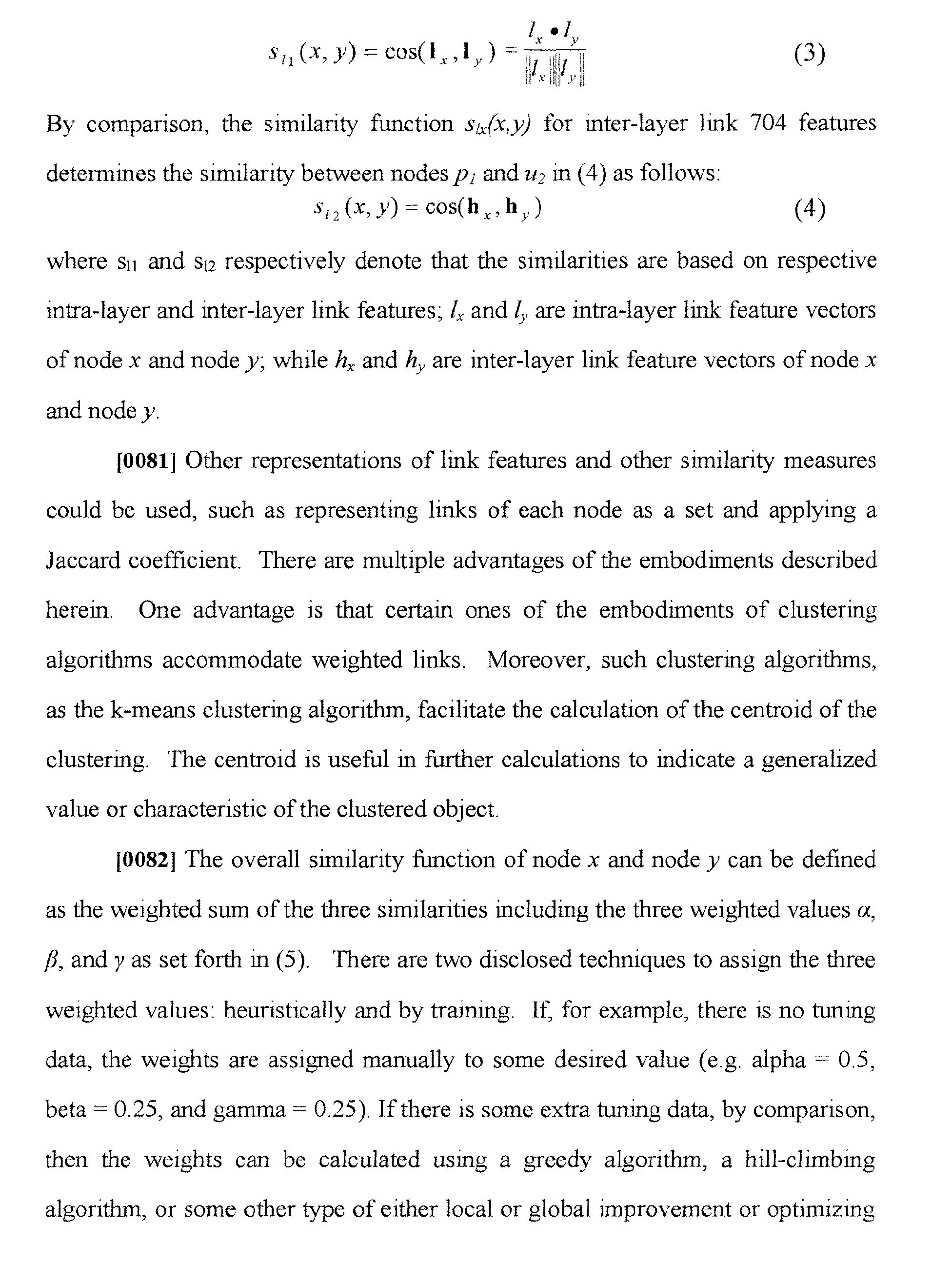

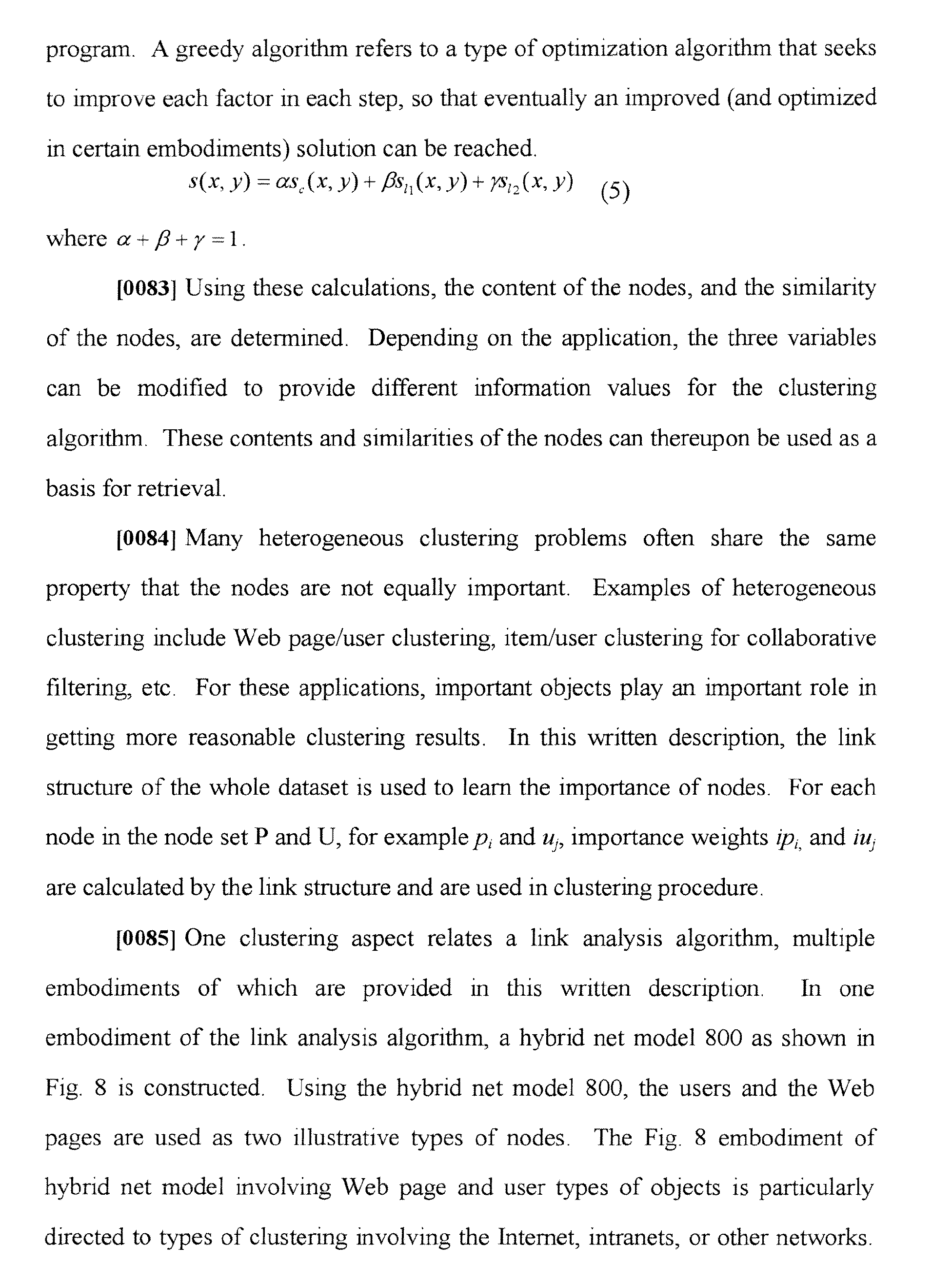

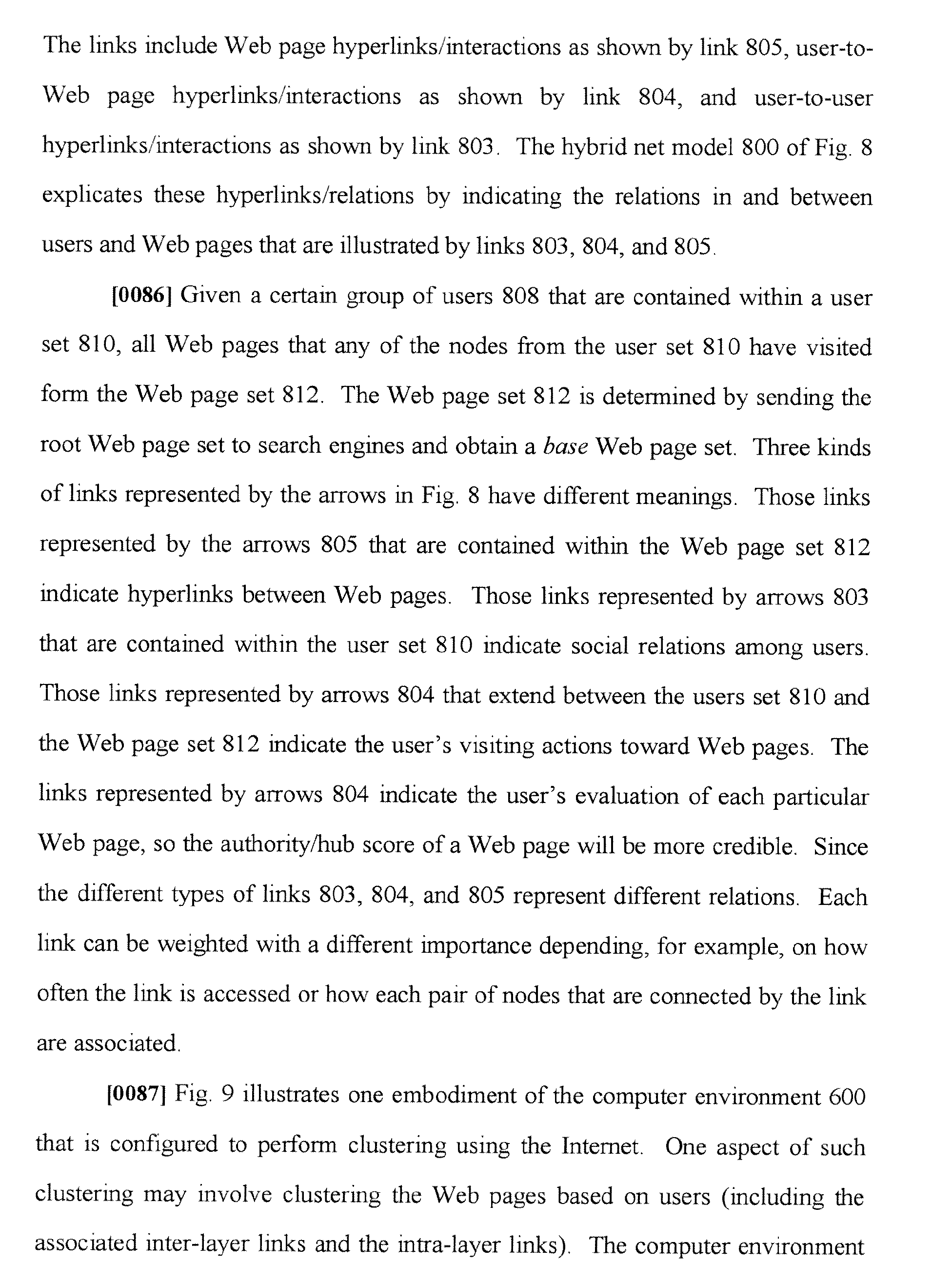

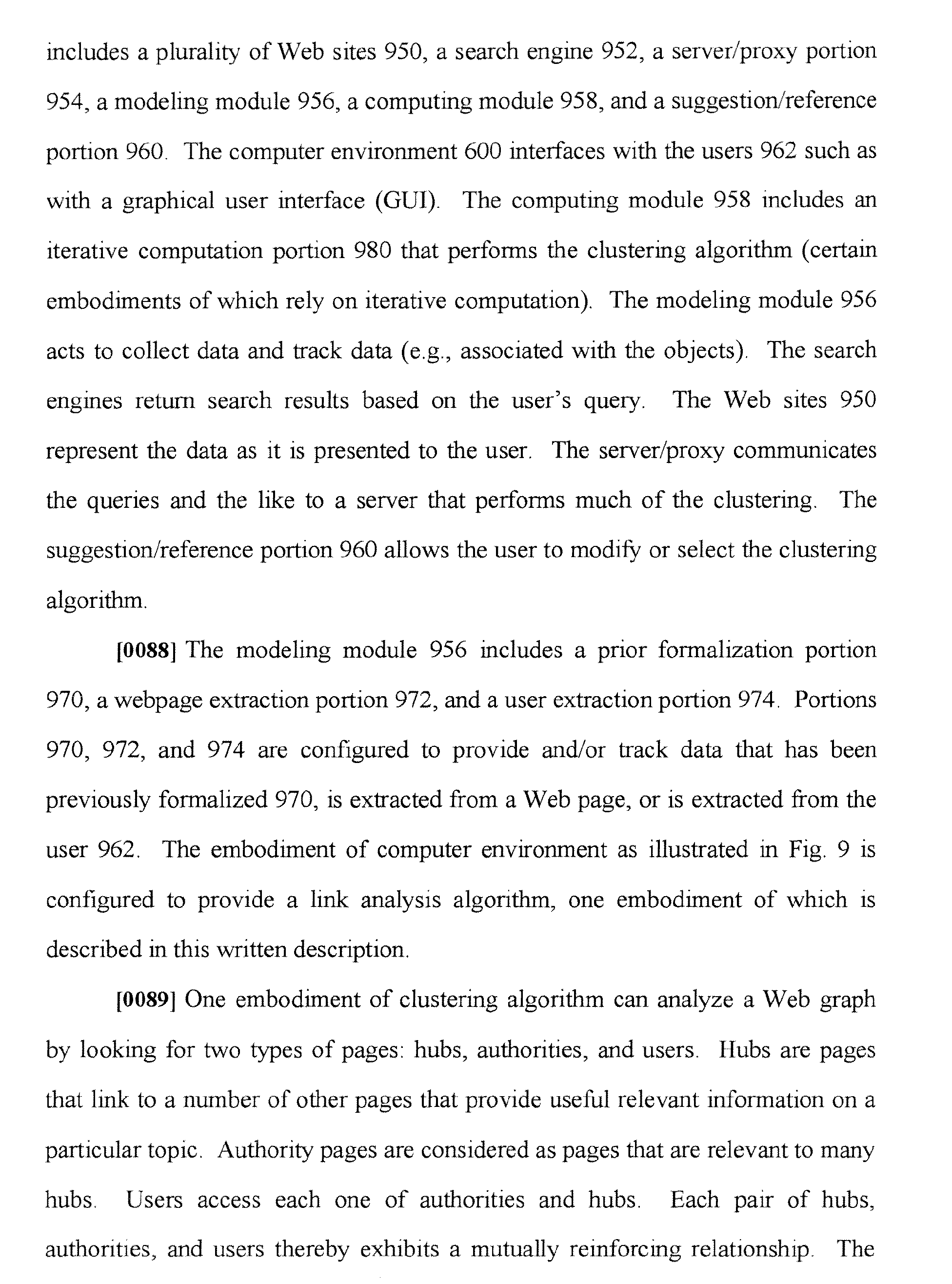

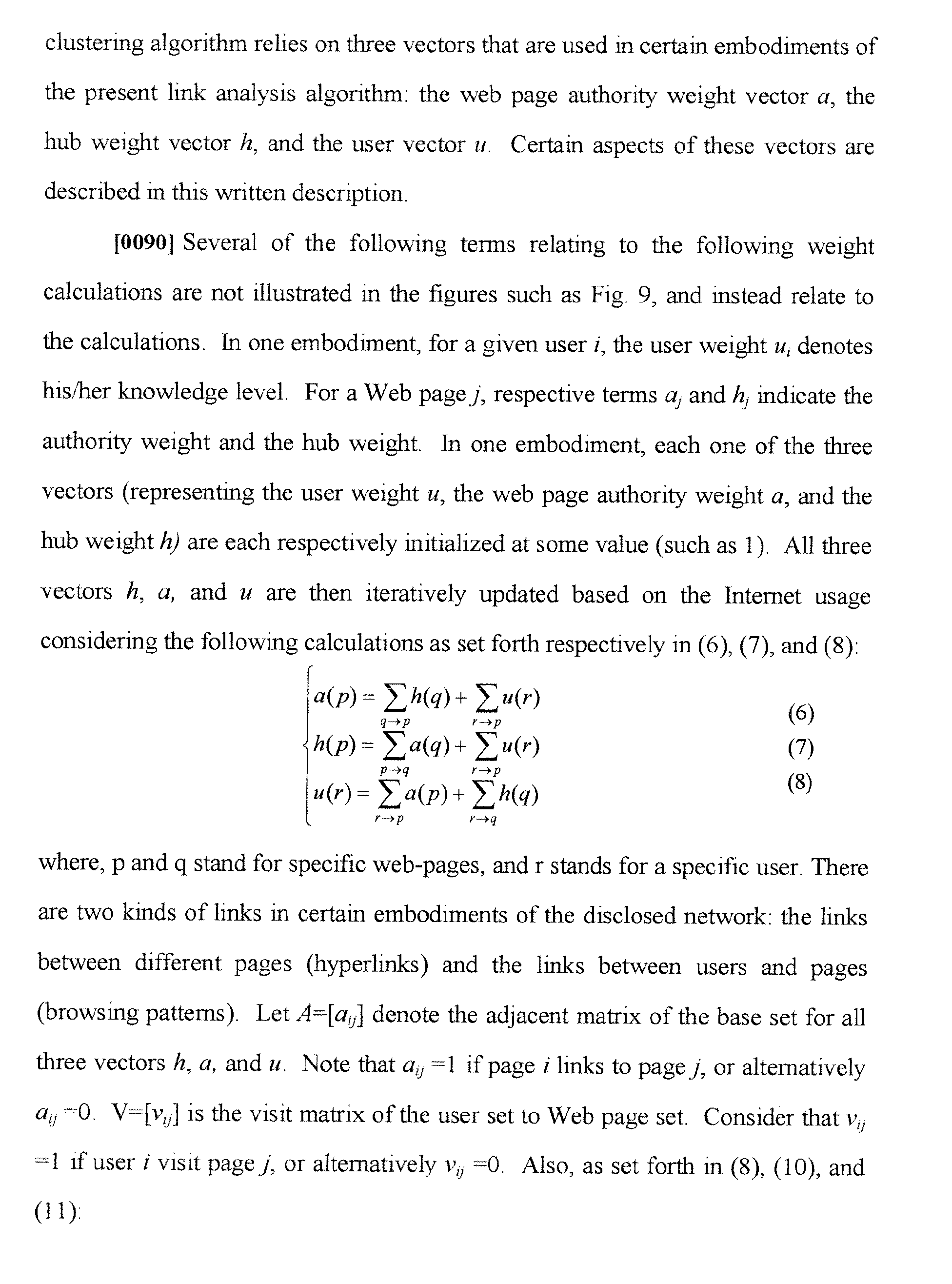

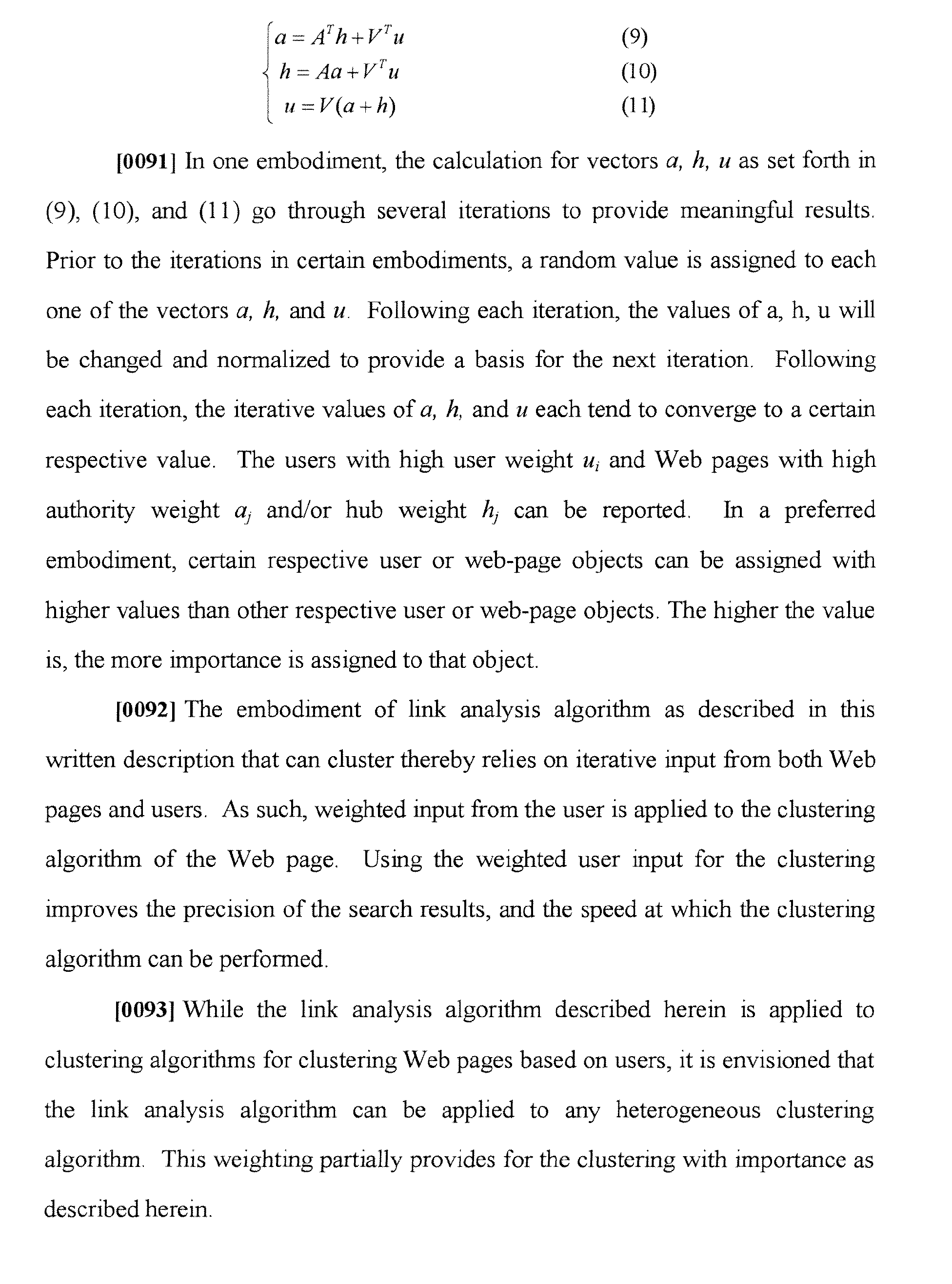

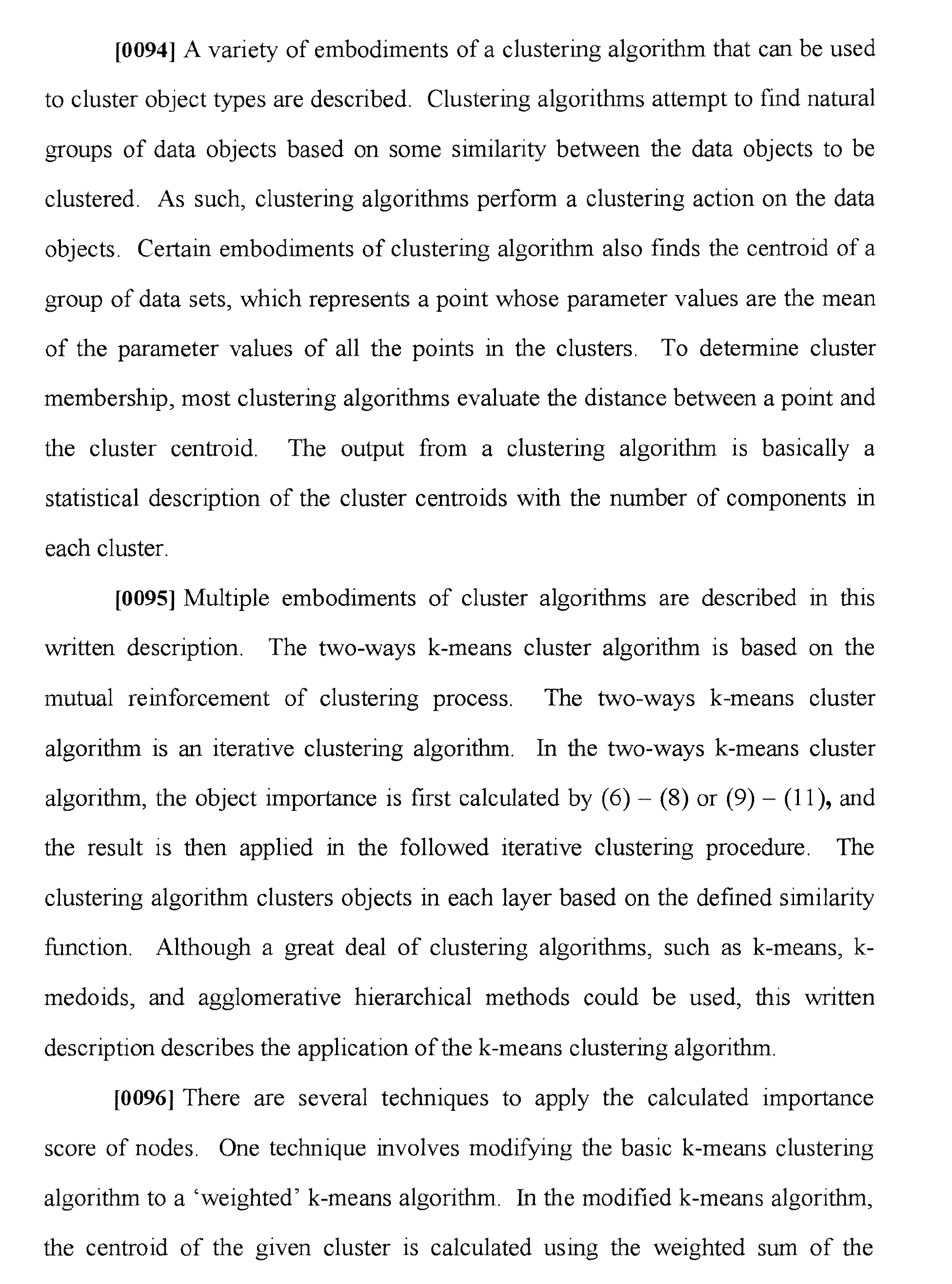

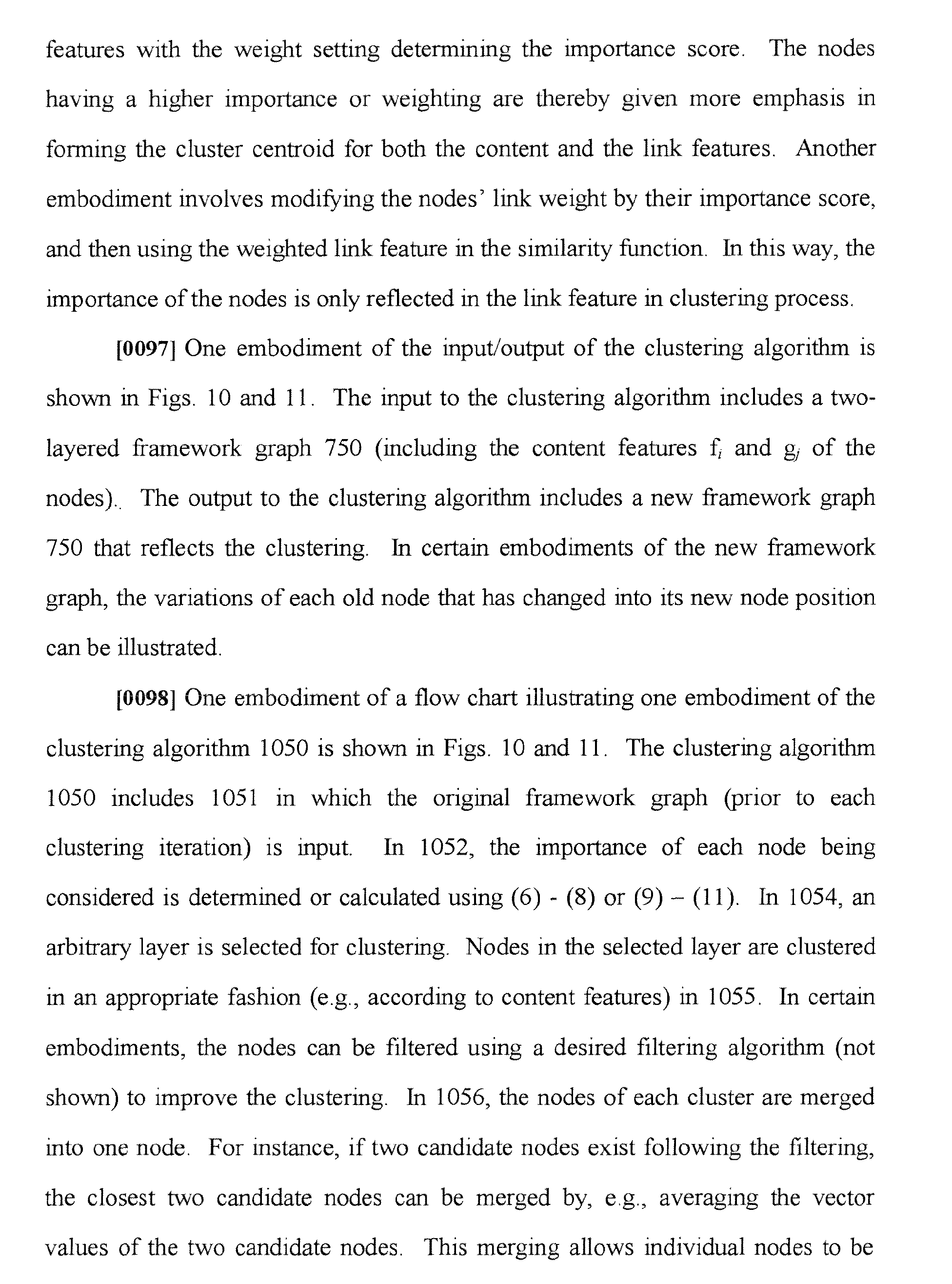

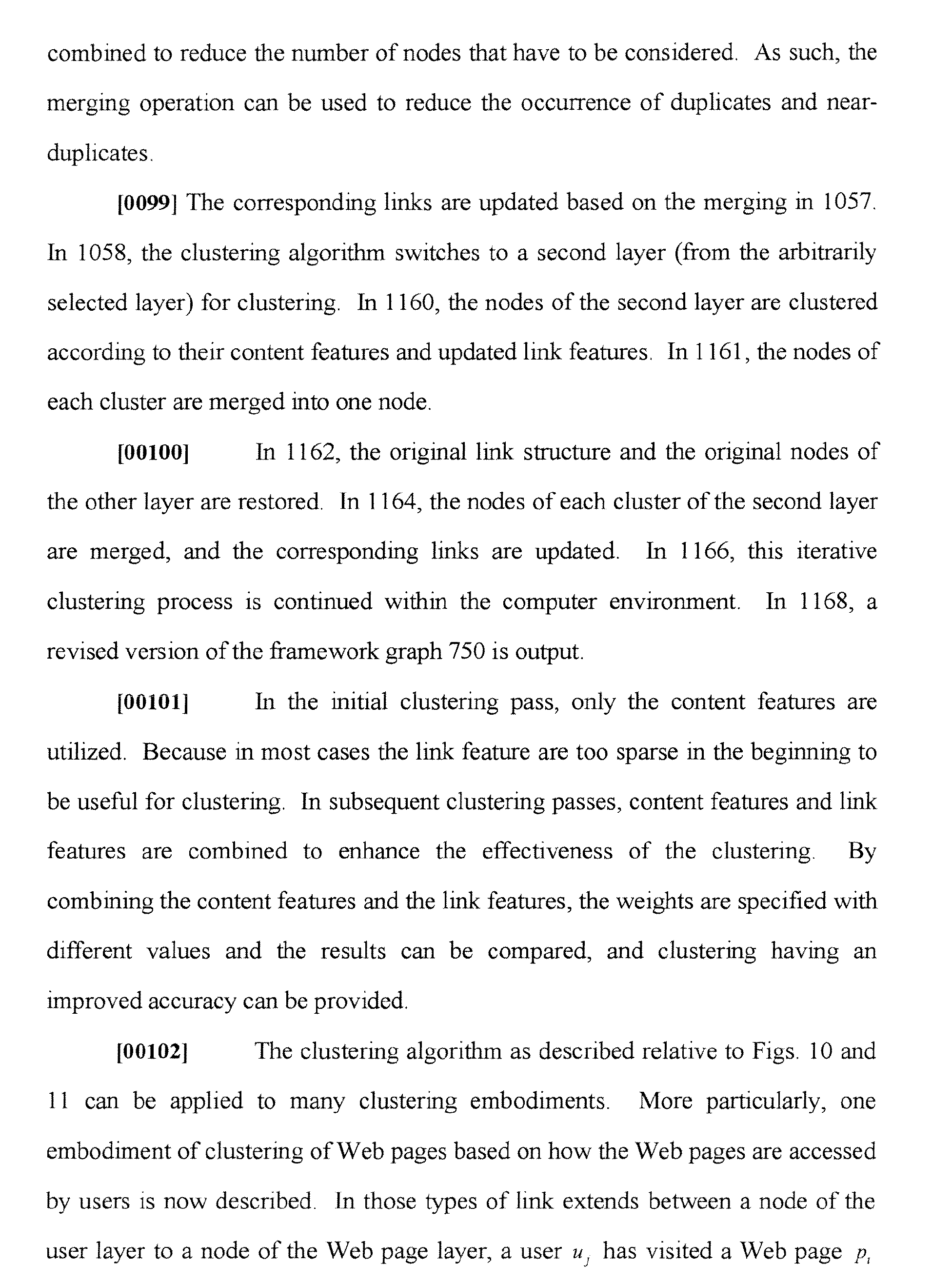

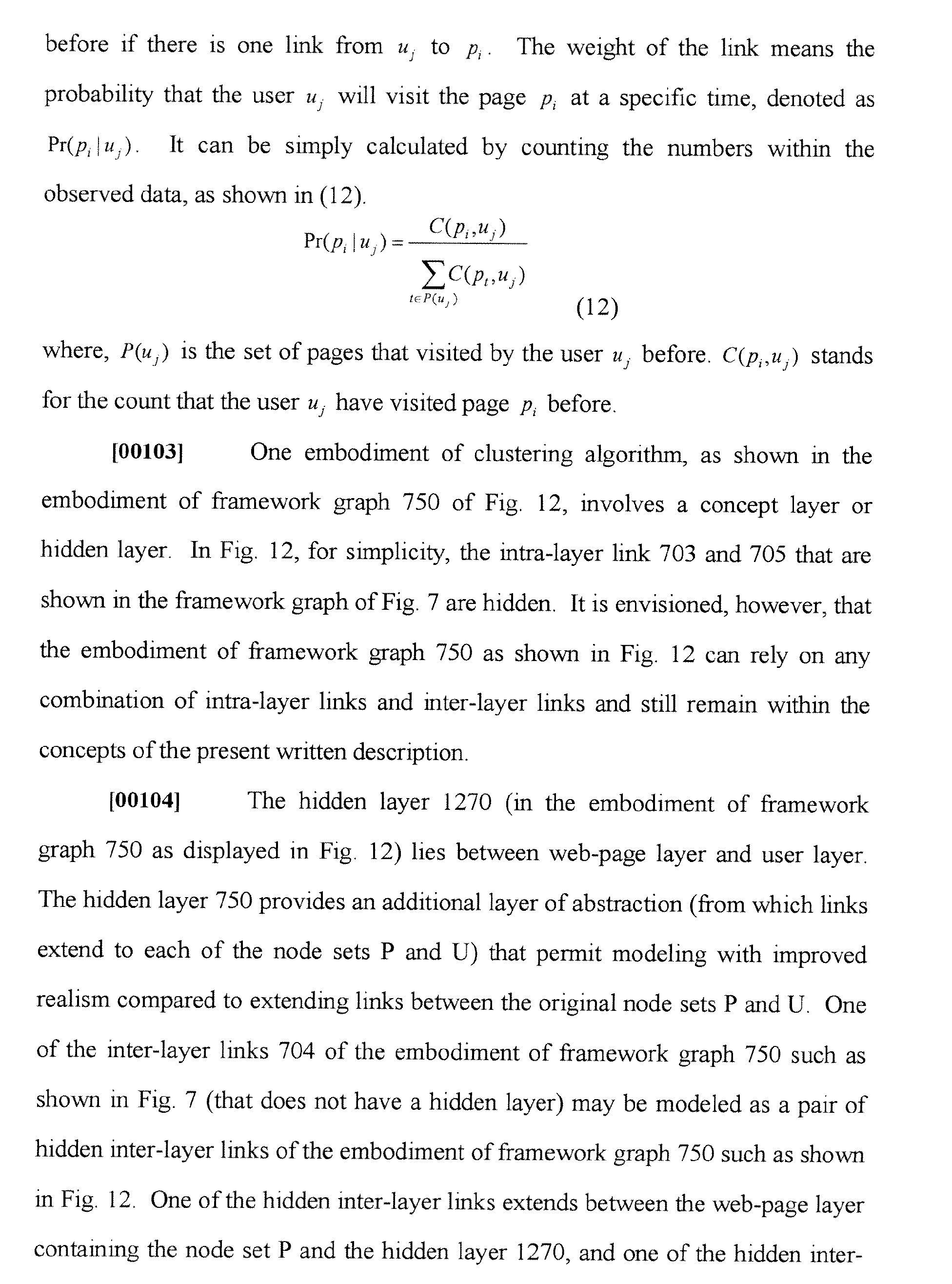

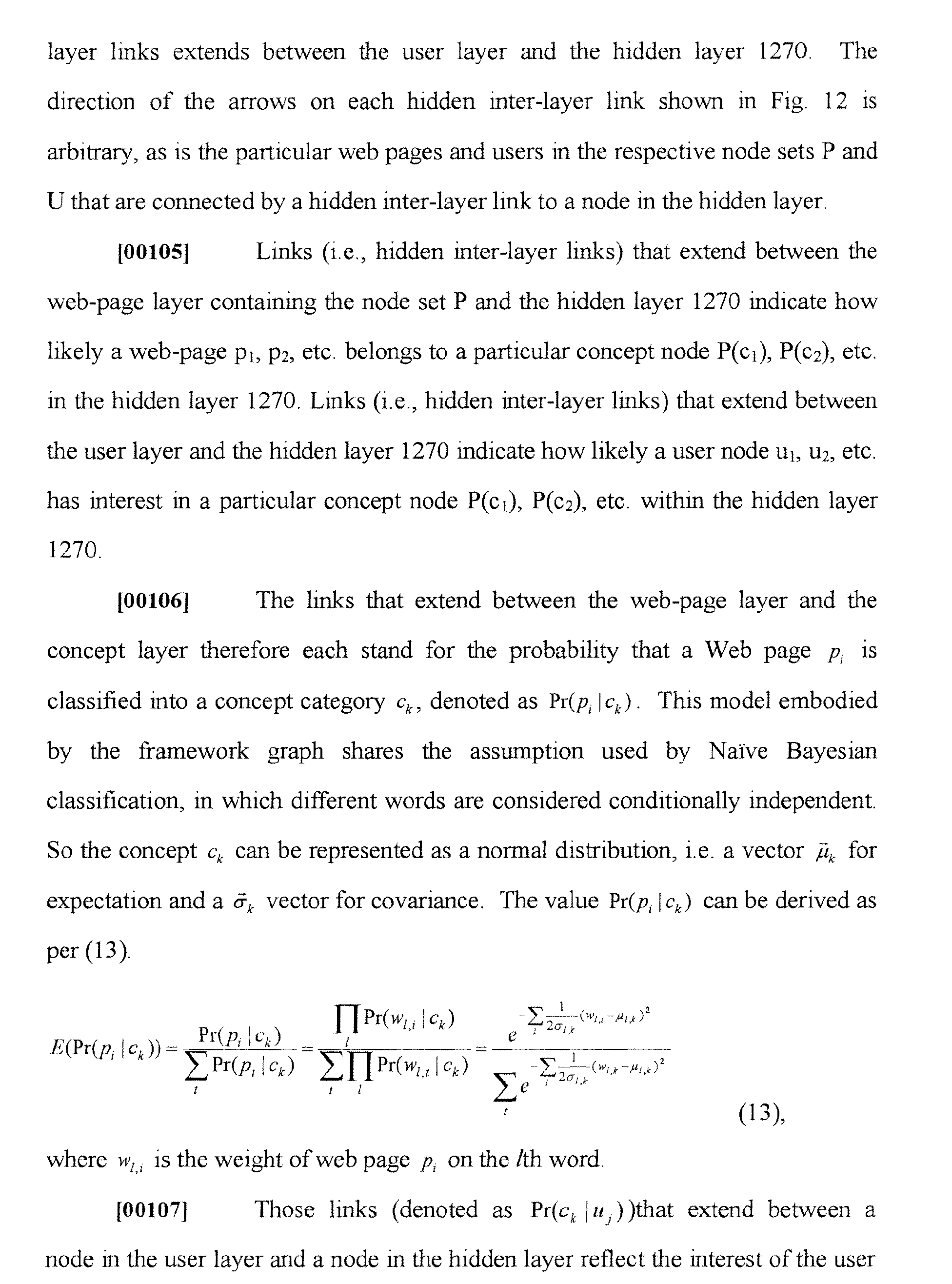

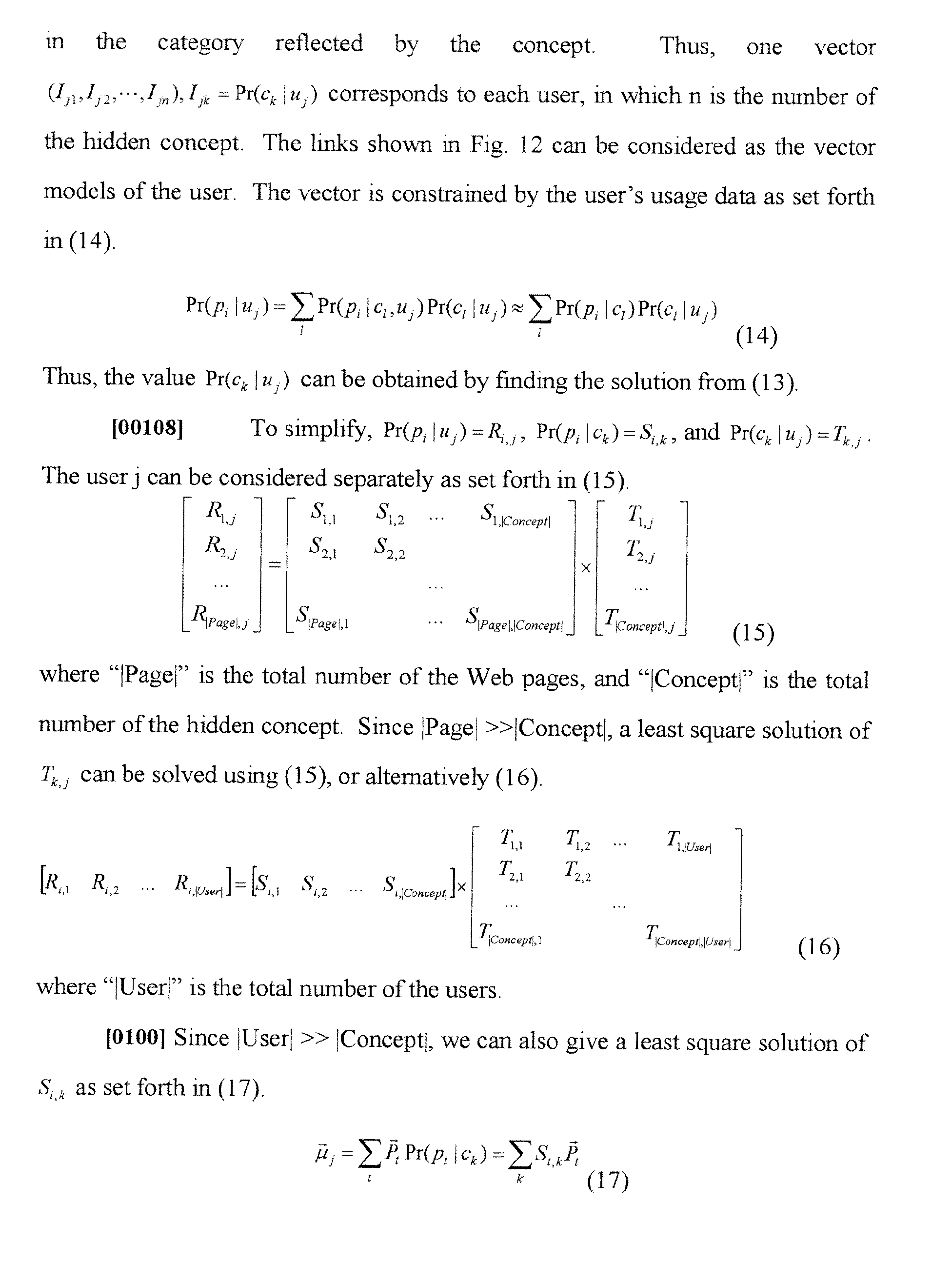

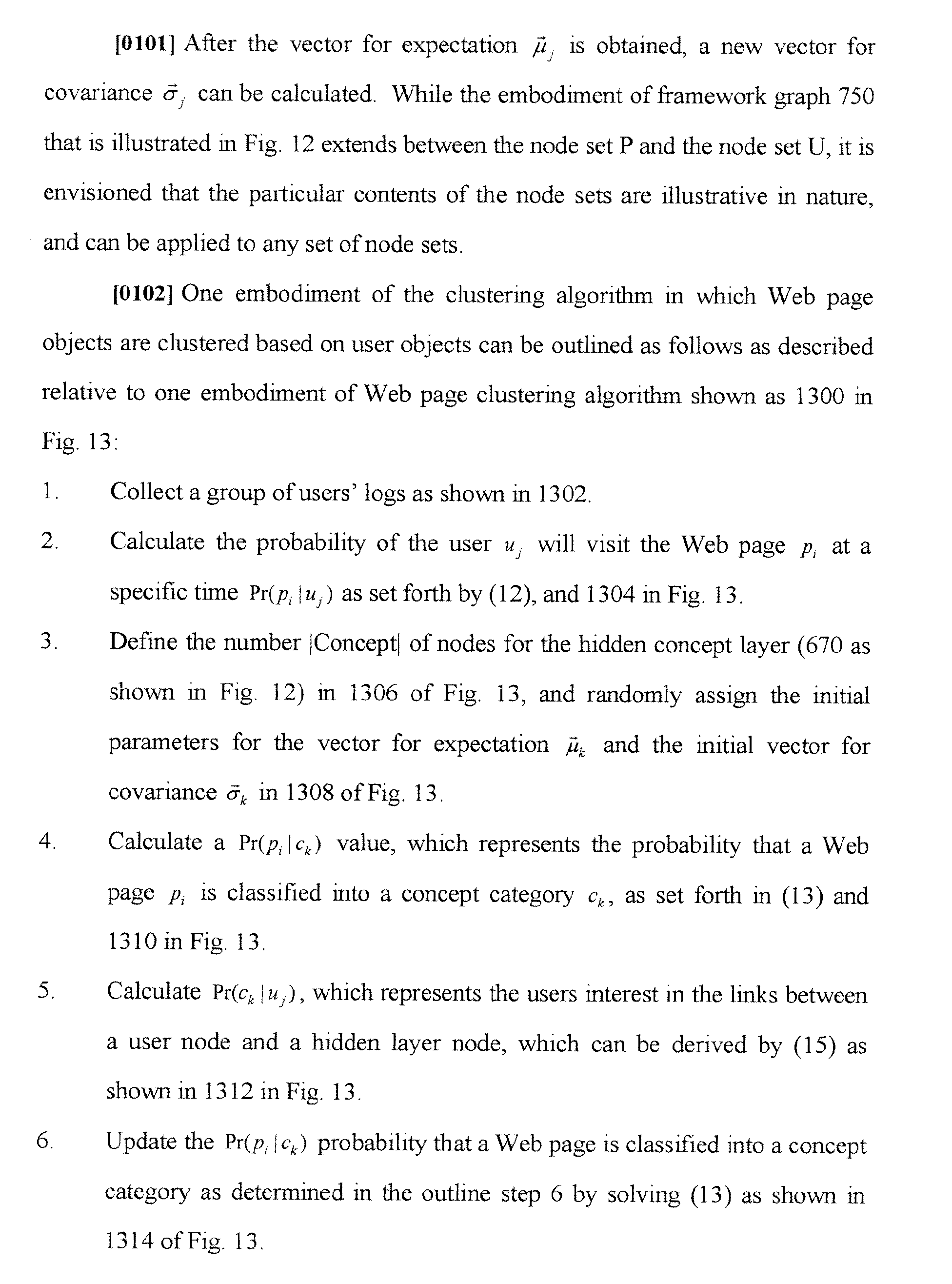

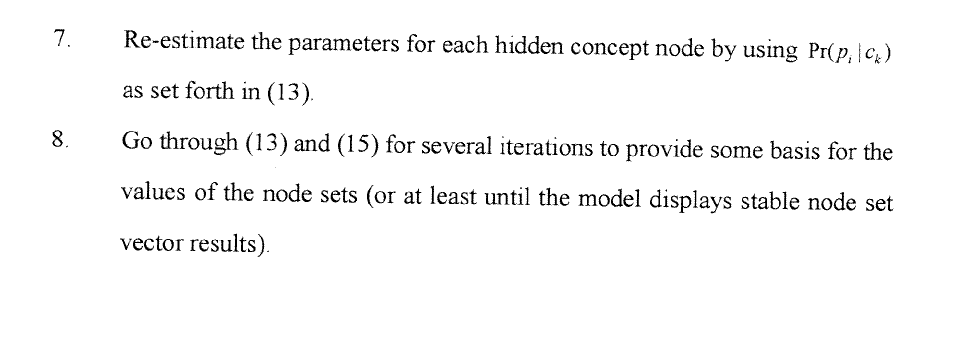

## Claims

1. A method comprising:
converting, by a computing device, unstructured service requests to one or more structured answer objects, each structured answer object comprising hierarchically structured historic problem diagnosis data; and
in view of a product problem description:
identifying a set of the one or more structured answer data objects, each structured solution data object in the set comprising term(s) and/or phrase(s) related to the product problem description; and
providing historic and hierarchically structured problem diagnosis data from the set to an end-user for product problem diagnosis.

2. A method as recited in claim 1, and wherein the problem diagnosis data comprise any one or more of a product problem description, symptom, cause, and resolution.

3. A method as recited in claim 1, and wherein the problem diagnosis data comprise a link to a product support article.

4. A method as recited in claim 1, and wherein converting, identifying, and providing are performed by a server computing device, and wherein the method further comprises:
receiving, from a client computing device, the product problem description; and
wherein providing further comprises:
searching an index for terms and/or phrases that match term(s) in the product problem description to identify the one or more structured answer objects in the set;
communicating the set to the client computing device for display by a troubleshooting wizard to the end-user.

5. A method as recited in claim 1, wherein the method further comprises dynamically generating a knowledge base article from information provided by the set.

6. A method as recited in claim 1, wherein after converting and before identifying and providing, the method further comprises:
generating an index by:
extracting features from the structured answer objects;
analyzing the features to identify the terms and the phrases;
assigning relevance weight to the terms and the phrases;
normalizing terminology within the terms and the phrases; and
wherein identifying is based on information in the index.

7. A method as recited in claim 6, wherein after converting and before identifying and providing, the method further comprises:
clustering respective ones of the structured answer objects based on the index to group related structured answer objects; and
wherein providing, if there is more that one structured answer object in the set, the set comprises a reinforced cluster of structured answer objects.

8. A method as recited in claim 7, wherein clustering comprises reinforced and unified clustering operations.

9. A method comprising:
communicating a search request to a server computing device, the search request comprising a product problem description;
responsive to receiving a response to the search request, presenting, by a troubleshooting wizard, information from the response; and
wherein the information comprises hierarchically structured historic problem diagnosis data, the historic problem diagnosis data being associated with term(s) and/or phrase(s) related to the product problem description.

10. A method as recited in claim 9, wherein the historic problem diagnosis data comprise any one or more of hierarchically structured product problem description, symptom, cause, and resolution information.

11. A method as recited in claim 9, wherein the information comprises a link to a product support article.

12. A method as recited in claim 9, wherein the information comprises a set of structured answer objects.

13. A method as recited in claim 12, wherein respective ones of the structured answer objects are clustered by the server as corresponding to one another, the clustering being based on reinforced clustering operations.

14. A method as recited in claim 13, wherein the clustering is further based on unified clustering operations.

15. A computer-readable media comprising computer-executable instructions for:
converting, by a computing device, unstructured service requests to one or more structured answer objects, each structured answer object comprising hierarchically structured historic problem diagnosis data; and
in view of a product problem description:
identifying a set of the one or more structured answer data objects, each structured solution data object in the set comprising term(s) and/or phrase(s) related to the product problem description; and
providing historic and hierarchically structured problem diagnosis data from the set to an end-user for product problem diagnosis.

16. A computer-readable media as recited in claim 15, and wherein the problem diagnosis data comprise any one or more of a product problem description, symptom, cause, and resolution.

17. A computer-readable media as recited in claim 15, and wherein the problem diagnosis data comprise a link to a product support article.

18. A computer-readable media as recited in claim 15, and wherein converting, identifying, and providing are performed by a server computing device, and wherein the computer-executable instruction further comprise instructions for:
receiving, from a client computing device, the product problem description; and
wherein providing further comprises:
searching an index for terms and/or phrases that match term(s) in the product problem description to identify the one or more structured answer objects in the set;
communicating the set to the client computing device for display by a troubleshooting wizard to the end-user.

19. A computer-readable media as recited in claim 15, wherein the computer-executable instruction further comprise instructions for dynamically generating a knowledge base article from information provided by the set.

20. A computer-readable media as recited in claim 15, wherein after converting and before identifying and providing, the computer-executable instruction further comprise instructions for:
generating an index by:
extracting features from the structured answer objects;
analyzing the features to identify the terms and the phrases;
assigning relevance weight to the terms and the phrases;
normalizing terminology within the terms and the phrases; and
wherein identifying is based on information in the index.

21. A computer-readable media as recited in claim 20, wherein after converting and before identifying and providing, the computer-executable instruction further comprise instructions for:
clustering respective ones of the structured answer objects based on the index to group related structured answer objects; and
wherein providing, if there is more that one structured answer object in the set, the set comprises a reinforced cluster of structured answer objects.

22. A computer-readable media as recited in claim 21, wherein clustering comprises reinforced and unified clustering operations.

23. A computer-readable media comprising computer-executable instructions for:
communicating a search request to a server computing device, the search request comprising a product problem description;
responsive to receiving a response to the search request, presenting, by a troubleshooting wizard, information from the response, the information comprising hierarchically structured historic problem diagnosis data, the historic problem diagnosis data being associated with term(s) and/or phrase(s) related to the product problem description.

24. A computer-readable media as recited in claim 23, wherein the historic problem diagnosis data comprise any one or more of hierarchically structured product problem description, symptom, cause, and resolution information.

25. A computer-readable media as recited in claim 23, wherein the information comprises a link to a product support article.

26. A computer-readable media as recited in claim 23, wherein the information comprises a set of structured answer objects.

27. A computer-readable media as recited in claim 26, wherein respective ones of the structured answer objects were clustered by the server as corresponding to one-another, the clustering being based on reinforced clustering operations.

28. A computer-readable media as recited in claim 27, wherein the clustering is further based on unified clustering operations.

29. A computer-readable media comprising a structured solution request data structure for use in product problem analysis and diagonsis, the structured solution request data structure comprising:
a product problem description data field;
a product problem cause data field;
a product problem resolution data field; and
wherein the product problem description data field is a parent node of the product problem cause data field, and the product problem cause data field is a parent node of the product problem resolution data field.

30. A computer-readable media as recited in claim 29, wherein the structured solution request data structure further comprises a product problem symptom data field, the product problem description field being a parent node of the product problem symptom data field.

31. A computing device comprising:
a processor; and
a memory coupled to the processor, the memory comprising computer-program instructions executable by the processor for:
converting, by a computing device, unstructured service requests to one or more structured answer objects, each structured answer object comprising hierarchically structured historic problem diagnosis data; and
in view of a product problem description:
identifying a set of the one or more structured answer data objects, each structured solution data object in the set comprising term(s) and/or phrase(s) related to the product problem description; and
providing historic and hierarchically structured problem diagnosis data from the set to an end-user for product problem diagnosis.

32. A computing device as recited in claim 31, and wherein the problem diagnosis data comprise any one or more of a product problem description, symptom, cause, and resolution.

33. A computing device as recited in claim 31, and wherein the problem diagnosis data comprise a link to a product support article.

34. A computing device as recited in claim 31, and wherein converting, identifying, and providing are performed by a server computing device, and wherein the computer-executable instruction further comprise instructions for:
receiving, from a client computing device, the product problem description; and
wherein providing further comprises:
searching an index for terms and/or phrases that match term(s) in the product problem description to identify the one or more structured answer objects in the set;
communicating the set to the client computing device for display by a troubleshooting wizard to the end-user.

35. A computing device as recited in claim 31, wherein the computer-executable instruction further comprise instructions for dynamically generating a knowledge base article from information provided by the set.

36. A computing device as recited in claim 31, wherein after converting and before identifying and providing, the computer-executable instruction further comprise instructions for:
generating an index by:
extracting features from the structured answer objects;
analyzing the features to identify the terms and the phrases;
assigning relevance weight to the terms and the phrases;
normalizing terminology within the terms and the phrases; and
wherein identifying is based on information in the index.

37. A computing device as recited in claim 36, wherein after converting and before identifying and providing, the computer-executable instruction further comprise instructions for:
clustering respective ones of the structured answer objects based on the index to group related structured answer objects; and
wherein providing, if there is more that one structured answer object in the set, the set comprises a reinforced cluster of structured answer objects.

38. A computing device as recited in claim 37, wherein clustering comprises reinforced and unified clustering operations.

39. A computing device comprising:
a processor; and
a memory coupled to the processor, the memory comprising computer-program instructions executable by the processor for:
communicating a search request to a server computing device, the search request comprising a product problem description;
responsive to receiving a response to the search request, presenting, by a troubleshooting wizard, information from the response, the information comprising hierarchically structured historic problem diagnosis data, the historic problem diagnosis data being associated with term(s) and/or phrase(s) related to the product problem description.

40. A computing device as recited in claim 39, wherein the historic problem diagnosis data comprise any one or more of hierarchically structured product problem description, symptom, cause, and resolution information.

41. A computing device as recited in claim 39, wherein the information comprises a link to a product support article.

42. A computing device as recited in claim 39, wherein the information comprises a set of structured answer objects.

43. A computing device as recited in claim 42, wherein respective ones of the structured answer objects were clustered by the server as corresponding to one-another, the clustering being based on reinforced clustering operations.

44. A computing device as recited in claim 43, wherein the clustering is further based on unified clustering operations.

45. A computing device comprising:
means for converting unstructured service requests to one or more structured answer objects, each structured answer object comprising hierarchically structured historic problem diagnosis data; and
in view of a product problem description:
means for identifying a set of the one or more structured answer data objects, each structured solution data object in the set comprising term(s) and/or phrase(s) related to the product problem description; and
means for providing historic and hierarchically structured problem diagnosis data from the set to an end-user for product problem diagnosis.

46. A computing device as recited in claim 45, and wherein the problem diagnosis data comprise any one or more of a product problem description, symptom, cause, and resolution.

47. A computing device as recited in claim 45, and wherein the problem diagnosis data comprise a link to a product support article.

48. A computing device as recited in claim 45, and further comprising:
means for receiving, from a client computing device, the product problem description; and
wherein the means for providing further comprises:
means for searching an index for terms and/or phrases that match term(s) in the product problem description to identify the one or more structured answer objects in the set; and
means for communicating the set to the client computing device for display by a troubleshooting wizard to the end-user.

49. A computing device as recited in claim 45, further comprising means for dynamically generating a knowledge base article from information provided by the set.

50. A computing device comprising:
means for communicating a search request to a server computing device, the search request comprising a product problem description;
responsive to receiving a response to the search request, means for presenting information from the response, the information comprising hierarchically structured historic problem diagnosis data, the historic problem diagnosis data being associated with term(s) and/or phrase(s) related to the product problem description.

51. A computing device as recited in claim 50, wherein the historic problem diagnosis data comprise any one or more of hierarchically structured product problem description, symptom, cause, and resolution information.

52. A computing device as recited in claim 50, wherein the information comprises a link to a product support article.

53. A computing device as recited in claim 50, wherein the information comprises a set of structured answer objects.

54. A computing device as recited in claim 53, wherein respective ones of the structured answer objects were clustered by the server as corresponding to one another.
